## Europäisches Patentamt
## European Patent Office
## Office européen des brevets

(19)

(11) Veröffentlichungsnummer: **0 032 752**
**B1**

(12) # EUROPÄISCHE PATENTSCHRIFT

(45) Veröffentlichungstag der Patentschrift:
**27.06.84**

(51) Int. Cl.³: **A 01 J 5/04,** A 01 J 5/12,
A 01 J 5/14

(21) Anmeldenummer: **81100427.4**

(22) Anmeldetag: **21.01.81**

(54) **Verfahren und Vorrichtung zum maschinellen Milchentzug.**

(30) Priorität: **21.01.80 DE 3001963**
**17.12.80 DE 3047579**

(43) Veröffentlichungstag der Anmeldung:
**29.07.81 Patentblatt 81/30**

(45) Bekanntmachung des Hinweises auf die Patenterteilung:
**27.06.84 Patentblatt 84/26**

(84) Benannte Vertragsstaaten:
**AT BE CH FR GB IT LI NL SE**

(56) Entgegenhaltungen:
**DE - A - 2 423 554**
**DE - A - 2 524 398**
**DE - A - 2 746 310**
**DE - B - 1 217 132**
**DE - B - 1 482 320**
**DE - B - 1 956 196**
**DE - U - 7 017 027**
**US - A - 4 011 838**
**US - A - 4 211 184**

(73) Patentinhaber: **BIO-MELKTECHNIK SWISS Hoefelmayr
& Co., Steinwichslenstrasse 20, CH-9052 Niederteufen
(CH)**

(72) Erfinder: **Hoefelmayr, Tilman, Dr.,
Steinwichslenstrasse 20, CH-9052 Niederteufen AR (CH)**
Erfinder: **Maier, Jakob, Schelmengriesstrasse 1,
CH-8939 Türkheim/Allgäu (CH)**

(74) Vertreter: **Patentanwälte Dipl.-Ing. A. Grünecker,
Dr.-Ing. H. Kinkeldey, Dr.-Ing. W. Stockmair,, Dr. rer. nat.
K. Schumann, Dipl.-Ing. P.H. Jakob, Dr. rer. nat. G.
Bezold Maximilianstrasse 58, D-8000 München 22 (DE)**

## Beschreibung

Die Erfindung betrifft ein Verfahren zum maschinellen Milchentzug, bei dem zum Entziehen der Milch an dem Innenraum eines an eine Zitze angesetzten Melkbechers ein Unterdruck vorbestimmter Höhe angelegt wird und gegebenenfalls eine Pulsation eines Zitzengummis mit vorbestimmter Frequenz und Stärke durchgeführt wird, und vor der Hauptmelkphase auf die Zitze bei angesetztem Melkbecher während einer vorbestimmten Zeit stimulierend eingewirkt wird. Die Erfindung betrifft weiterhin eine Vorrichtung zur Durchführung des Verfahrens.

Die Tierarten, die der Mensch zur maschinellen Milchgewinnung heranzieht, wie etwa Kühe, Schafe und Ziegen, sind von Natur als Fluchttiere mit einem Mechanismus ausgestattet, der bei Gefahrensituationen eine unmittelbare Blockierung der Milchabgabe bewirken kann. Dieses Phänomen ist jedem Melker bekannt und als sogenanntes »Milchaufziehen« gefürchtet. Grundvoraussetzungen für einen Milchentzug überhaupt sind daher zunächst einmal, daß das zu melkende Tier frei von Angst ist, das Gefühl der Geborgenheit und Ruhe und eines allgemeinen Wohlbefindens hat. Durch Gewöhnung der Tiere an den Melkprozeß, durch Entwicklung von Melkverfahren ohne direkt schmerzende Wirkung, sowie durch Selektion der Tiere auf Melkbereitschaft und Milchleistung sind die Fälle eines totalen Milchaufziehens heute nicht mehr häufig. Neben der totalen Blockierung der Milchabgabe fällt aber auch eine in weiten Grenzen schwankende teilweise Blockierung bei einzelnen Tieren auf, die sich in unterschiedlich starker Melkunwilligkeit äußert.

In Abhängigkeit von der Tierrasse und der Selektion findet man deutliche Unterschiede in der Anpassung an das Maschinenmelken. Diese Unterschiede zeigen sich in dem Grad der durch den maschinellen Melkprozeß möglichen Euterentleerung. So ist z. B. die einzige Milchschafrasse, von der heute eine gute Melkarbeit bekannt ist, das sardische Schaf. Bei dieser Rasse liegt das Maschinenhauptgemelk zwischen 81 und 87% bzw. das Nachgemelk zwischen 19 und 13%. Beim Durchschnitt der derzeit maschinell gemolkenen Schafrassen liegt das Nachgemelk bei etwa 37%. Bezeichnend in diesem Zusammenhang ist, daß sogar bei als gut durchgezüchtet geltenden Schafrassen (Assaf, improved Awassi) der Grad der Milchgewinnung mit der Maschine so unvollkommen ist, daß sogar Zwillingslämmer die nach dem Melken zugelassen werden, noch mühelos die für ihr Wachstum erforderliche Milchmenge entziehen können. Dieses Beispiel dokumentiert besonders gut, daß es offensichtlich einer geeigneten Stimulation bedarf, um tatsächlich alle Milch abziehen zu können. Dies wird erhärtet durch eine neue wissenschaftliche Untersuchung an 7 Schafrassen. Hierbei konnte durch Stimulation der Anteil der Tiere mit voller Milchabgabe an die Maschine im Durchschnitt von 49% auf 76% gesteigert werden. Die Erhöhung war bei allen sieben Rassen annähernd gleich. Weiterhin ist nach dieser Untersuchung der positive Entleerungseffekt aufgrund der Stimulation derart, daß die Erhöhung der abgezogenen Milchmenge etwa der Verminderung des von Hand abgemolkenen Nachgemelks entspricht.

Bei Milchkühen konnten in den letzten 30 Jahren parallel mit der allgemeinen Einführung der Melkmaschine enorme Zuchtfortschritte in der Anpassung an den maschinellen Milchentzug erreicht werden. So gibt es heute Hochleistungsrassen (Holstein Frisian, deutsches Braunvieh, deutsche Schwarzbunte, dänische Rote) bzw. deren Kreuzungsprodukte (Israel Frisian, brown Swiss, Braunvieh × Holstein Frisian), die bei sehr hohen Milchleistungen sehr vollständig maschinell gemolken werden können. Auf der anderen Seite sind jedoch aufgrund unterschiedlicher Zuchtziele (z. B. Betonung der Fleischleistung, geringere Empfindlichkeit, niedrigere Anforderungen an das Futterangebot) die klassischen Landrassen (deutsches Fleckvieh, Schweizer Braunvieh) durchaus aktuell und weit verbreitet. Auch diese Tiere lassen sich willig melken, eine befriedigende Euterentleerung ist jedoch nur nach einer vollwertigen Stimulation möglich. Selbst dann erreicht man jedoch nicht immer den hohen Grad der Euterentleerung reiner Milchviehrassen. Wie wissenschaftliche Untersuchungen zeigen, reagieren jedoch auch diese Rassen deutlich positiv in der Jahresmilchleistung und Jahresfettleistung (Größenordnung plus 10%), wenn statt der gewöhnlichen Eutervorbereitung (Dauer 12 bis 20 Sekunden) laufend eine vollwertige Stimulation (Dauer 40 bis 60 Sekunden) durchgeführt wird. Eine gute Stimulation wirkt sich zudem zu Beginn der Laktation direkt auf das Wachstum der Milchdrüse aus.

Grundsätzlich wird die Melkbereitschaft durch eine Stimulation hergestellt. Das gilt sowohl für den natürlichen Saugtakt wie für die Milchgewinnung mit der Maschine. Die Stimulation ist ein sehr komplexer Prozeß. Ausgelöst durch den Stimulationsreiz lockern nervöse Reflexe die Spannung der glatten Muskulator im Euter. Dadurch erweitern sich insbesondere die feinen Milchgänge. Weiterhin wird von der Gehirnanhangdrüse das Hormon Ocytocin in die Blutbahn ausgeschüttet und bewirkt eine Kontraktion der Körbchenzellen, die die Milch bildenden Alveolen umgeben. Dadurch wird die in den Alveolen kontinuierlich sekretierte Milch aus der schwammartigen Drüsenstruktur ausgepreßt (Milchejektion) und kann dadurch erst in die unteren Hohlräume des Euters abfließen und damit überhaupt erst abgemolken werden. Die Milchejektion bewirkt eine Erhöhung des Euterinnendruckes auf etwa 30 bis 60 mbar, wodurch, unterstützt durch eine vermehrte Durchblutung, die Zitzen prall werden und die Engstelle zwischen Zitzen- und Drüsenzisterne (Fürstenbergscher Venenring) weit geöffnet wird. Nun erst ist das Tier melkbereit.

Unabhängig von der Art und der Rasse der Milchtiere ist eine optimale Milchabgabe jeweils nur durch einen schnellen und schonenden Entzug der Milch unmittelbar nach einer vollwertigen Milchejektion möglich.

Eine möglichst vollständige Euterentleerung ist für die Milchleistung deshalb äußerst wichtig, weil die Sekretionsrate (neben der Ausstattung mit Drüsengewebe und dessen Stoffwechselaktivität) abhängig ist vom zur Verfügung stehenden Raum. Mit steigender Füllung des Speichervolumens nimmt der Euterinnendruck zu. Da sich die Milchsekretion gegen diesen Druck vollzieht, verlangsamt sie sich mit zunehmendem Füllungsgrad des Speichervolumens. Aufgrund dieser Zusammenhänge ist die manchmal vertretene Ansicht, daß die beim vorangegangenen Melken nicht ermolkene Milch beim nächsten Melken zusätzlich anfällt, falsch. Sie ist vielmehr endgültig verloren. Entleert man längerfristig das Euter andauernd unvollständig, so führt dies direkt zu einer Verminderung der Tagesleistung, zu einer Verschlechterung des Durchhaltevermögens und zu einer Verkürzung der Laktationsdauer. Der Einfluß des Euterentleerungsgrades auf die Leistung zeigt sich am deutlichsten bei Hochleistungskühen, am geringsten bei Ziegen, da bei diesen das Speichervolumen der Drüsenzisterne im Verhältnis zum Drüsengewebe wesentlich größer ist.

Allgemein gilt, je besser die Stimulation ist, desto schneller und vollständiger kann die Milch gewonnen werden. Bei schlechter Stimulation steigt das Maschinennachgemelk, und damit die Handarbeit beim Melken. Gleichlaufend mit größer werdenden Nachgemelken treten auch vermehrt Eutererkrankungen auf.

Die Stimulation kann grundsätzlich durch verschiedene Reizarten, z. B. taktile, thermische, visuelle, akustische, olfaktorische Reizung, erfolgen. Das größte Gewicht kommt dabei den berührungsempfindlichen und den druckempfindlichen Reizrezeptoren in der Zitze und der Zitzenbasis zu. Diese werden bei der Handstimulation durch Zitzenmassage gereizt, bis die Milchejektion erfolgt. Für diese Arbeit muß der Melker mindestens 45 bis 60 sec aufwenden. Dies bedeutet bei Kühen im Durchschnitt rechnerisch fast eine Verdopplung der vom Melker pro Tier aufzuwendenden Routinezeit im Verhältns zu dem Fall, in dem keine dem Milchentzug vorausgehende Stimulation vorgenommen wird. Praktisch ist jedoch die Verlängerung der Routinezeit geringer, weil durch eine gute Stimulation das Nachgemelk deutlich kleiner ist und daher weniger Handarbeit bei seiner Gewinnung angewendet werden muß.

Beim Schaf sieht die arbeitswirtschaftliche Rechnung besonders schlecht aus, vor allem, weil hier pro Melkung nur etwa 10 Prozent der Milchmenge ermolken wird, die von einer Kuh gewonnen wird. Selbst wenn man auf das beim Schaf übliche Handnachmelken verzichten würde, würde durch die Einführung einer vorausgehenden manuellen Stimulation die ohnehin niedrige Arbeitsproduktivität immer noch um 40% sinken. Dementsprechend wird die Stimulation bei Schafen heute nirgends praktiziert.

Auf der anderen Seite muß man sich darüber im klaren sein, daß der Grad der Euterentleerung, der ohne Stimulation erreicht wird, auch von Tier zu Tier innerhalb einer Herde sehr stark schwankt. Bei Tieren, die sich ohne Stimulation nur sehr unvollkommen melken lassen, sind drastische Leistungseinbußen und Euterkrankheiten die zwangsläufige Folge. Bei Schafen verlaufen solche Euterkrankheiten in der Regel tödlich. Daneben zeigen unvoreingenommene ökonomische Überlegungen, daß letztlich kein arbeitswirtschaftlicher Rationalisierungseffekt so groß sein kann, daß er auch nur geringe Einbußen in der Milchleistung aufwiegen könnte. Zu einer möglichst vollständigen Milchgewinnung, d. h. einer vollwertigen Stimulation,besteht also bei allen Milchtieren letztlich wirtschaftlich gesehen keine Alternative.

In der Praxis sind seit langem vielfältige Versuche unternommen worden, die Arbeit der Stimulation zu mechanisieren. So sind verschiedenste Spezialbürsten, Vibratoren und massierende Einrichtungen bekanntgeworden. Diese Vorrichtungen haben jedoch alle den Nachteil, daß der Melker nach wie vor während der ganzen Stimulationsdauer an das Tier gebunden ist und somit keine Routinezeit einspart. Außerdem wird mit derartigen Einrichtungen meist mehr der Euterkörper gereizt als die Zitzen, deren Reizung wesentlich wirksamer ist.

Bestrebungen, wenigstens im Melkstand diesen Nachteil durch Semiautomatisierung zu beseitigen, konnten sich nicht durchsetzen, da die erforderliche Positionierung eine technisch aufwendige und im rauhen Praxisbetrieb anfällige Technik nötig macht. Insbesondere aber steht diesem Lösungsansatz entgegen, daß die erforderliche Einengung der Bewegungsfreiheit der Tiere häufig sogar zum gefürchteten Aufziehen der Milch führt und damit im Effekt häufig das genaue Gegenteil einer wirksamen Stimulation erzielt wird. Eine solche Positionierung macht insbesondere bei den unruhigen Schafen große Schwierigkeiten.

Aus der US-A-3 554 166 ist auch bereits eine Euterdusche bekanntgeworden, bei der ein am Boden aufstellbares Gerät mit mehreren nach aufwärts gerichteten Düsen hervorgeht, aus denen unter Druck warme Flüssigkeit gegen den Euter gesprüht werden kann. Die Nachteile einer derartigen Lösung bestehen in einem hohen Wasserverbrauch, zusätzliche Kosten für eine Erwärmung des Wassers sowie großen hygienischen Schwierigkeiten, weil vorhandene Verschmutzungen am Euter eingeweicht werden und die Zitzen durch das Herablaufen des Schmutzwassers verunreinigt werden, was nur durch sorgfältige Handnacharbeit rückgängig gemacht werden kann.

Gemäß der US-A-4 034 713 wird zur Stimulation eine eigene Vorrichtung im Melkstand vorgeschlagen, bei der jeweils pro Zitze eine mehrere Halterungen aufweisende Einrichtung vorgesehen ist, bei der die Halterungen sich federnd von verschiedenen Seiten gegen die Zitze anlegen und an ihren nach

**0 032 752**

innen weisenden Seiten Sprühköpfe besitzen, aus denen erwärmte Flüssigkeit gegen die Zitzen gesprüht werden kann. Das genannte Gerät dient jedoch lediglich zur Stimulation Es muß von dem Melker eigens angesetzt und am Ende der Stimulationsphase wieder abgenommen werden, um sodann erst anschließend das eigentliche Melkzeug an die Zitzen ansetzen zu können. Diese bekannten Stimulationsvorrichtungen, die unabhängig von der eigentlichen Melkmaschine arbeiten, haben gezeigt, daß eine Koordination zwischen Stimulation und einem unverzüglichen Ansetzen des Melkzeuges unter Praxisbedingungen kaum zu gewährleisten ist. Bleibt ein Tier jedoch im melkbereiten Zustand auch nur kurze Zeit stehen, bevor es gemolken wird, so verpufft nicht nur die Wirkung der Stimulation, sondern sie wirkt sich zum Teil sogar noch zusätzlich negativ auf die Euterentleerung aus. Gerade dies tritt in der Praxis häufig auf, weil der Melker in der Regel mehr Melkzeuge bedient und mit Routinearbeit, insbesondere mit dem Anrüsten und Nachmelken an einem anderen Tier beschäftigt ist. Mit einer im Sinne der Erhöhung der Arbeitsproduktivität zunehmenden Anzahl von Melkzeugen befindet sich der Melker in einer ständigen Streßsituation zwischen dem Erfordernis nach einer vollwertigen Stimulation, dem zeitgerechten Ansetzen des Melkzeugs und einer vollständigen Gewinnung des Maschinennachgemelks ohne vorheriges Blindmelken. Dabei muß sich der Melker praktisch immer gegen ein Tier entscheiden.

Um den Melker sowohl von einer eigentlichen Stimulationsarbeit als auch von dem zeitlichen Koordinationsproblem zwischen den einzelnen Arbeitsvorgängen zu Melkbeginn zu befreien, wurden Melkmaschinen entwickelt, bei denen der Hauptmelkphase eine Vorphase, die stimulieren soll, vorangeht.

So ist aus der DE-B-1 482 320 bereits ein übliches Melkverfahren mit einem Zweiraumbecher bekanntgeworden, bei dem in der eigentlichen Melkphase an den Becherzwischenraum durch den Pulsator abwechselnd ein Unterdruck und Atmosphärendruck angelegt wird, während in dem Innenraum des Zitzengummis ein konstanter Unterdruck herrscht. Bei diesem bekannten Melkzeug wird zu Beginn des Melkvorganges nach dem Ansetzen der Melkbecher an die Zitzen eine Stimulationsphase derart ausgeführt, daß im Innenraum des Zitzengummis ein Unterdruck angelegt wird von gleicher Höhe wie in der Melkphase. In den Melkbecherzwischenraum wird jedoch in der Entlastungsphase der Druck über den Atmosphärendruck hinaus erhöht, so daß sich eine stärkere Einfaltung des Zitzengummis ergibt, wodurch eine massierende Wirkung auf die Zitze ausgeübt werden soll. Die Druckerhöhung in der Pulsatorleitung wird erst dann wieder rückgängig gemacht, wenn die Alveolarmilch in die Zisternen einschießt. Es ist jedoch nicht angegeben, wie dies festgestellt wird. Da bereits während der Stimulationsphase der konstante Melkunterdruck angelegt wird und der Pulsatordruck eine Saugphase mit denselben Parametern wie beim Melkvorgang zeigt, tritt hier sogleich nach Ansetzen der Melkbecher der normale Milchentzug ein.

Aus der Zeitschrift »Deutsche Agrartechnik, 21. Jahrgang, Heft 4, April 1971« ist in dem Beitrag von L. Czech »Zur Automatisierung in der Milchgewinnung« Seite 164 ein Melkverfahren entsprechend der DE-B-1 482 320 bekanntgeworden. Auch bei diesem Verfahren wird gleich nach dem Ansetzen des Melkzeugs der normale Unterdruck an den Melkbecherinnenraum angelegt. Die Steuerung des Pulsatordrucks wird dagegen derart verändert, daß jeweils im Entlastungstakt in den Melkbecherzwischenraum ein Überdruck von 0,5 kp/cm² eingeleitet wird, während in der Saugphase der Druck auf den üblicherweise angewandten Unterdruck abgesenkt wird. Während des Entlastungstaktes wird somit auf die Zitzenspitzen eine kräftige Massagewirkung ausgeübt. Diese veränderten Bedingungen werden während einer konstanten Zeit von 60 Sekunden aufrechterhalten bevor auf den normalen Melkbetrieb geschaltet wird, bei dem der Pulsatordruck während des Entlastungstaktes lediglich bis auf Atmosphärendruck ansteigt. Da auch bei dieser Vorphase jeweils in den Saugtakten der üblicherweise angewandte Unterdruck anliegt, tritt auch bei diesem Verfahren sogleich nach Ansetzen der Melkbecher der normale Milchentzug ein.

Gemäß der DE-B-1 956 196 ist auch bereits ein maschinelles Milchentzugsverfahren mit Zweiraumbechern bekanntgeworden, bei dem man festgestellt hat, daß ein Hochklettern des Zweiraumbechers an der Zitze nach seinem Ansetzen an der Zitze erfolgt, wenn die Kuh noch nicht ausreichend stimuliert ist. Da dies zu einer Blockierung des Milchflusses insgesamt führen kann, wurde gemäß diesem bekannten Verfahren zu Anfang des Melkvorganges sowohl der Unterdruck im Innenraum des Zitzengummis wie auch der Unterdruck im Zwischenraum des Melkbechers in den Saugphasen herabgesetzt, um eine Beschädigung der Zitze zu vermeiden und um überhaupt einen Milchentzug zu ermöglichen. Eine Änderung des Unterdrucks im Melkbecherzwischenraum in Anpassung an den verminderten Unterdruck im Innenraum, des Zitzengummis erfolgt deshalb, um den sogenannten »ballooning« Effekt zu vermeiden. Eine solche Herabsetzung des Unterdrucks erfolgt auch insbesondere am Ende des Melkvorganges, wenn der Milchfluß sinkt. Die Änderung des Unterdrucks erfolgt hierbei rein in Abhängigkeit von dem gemessenen Milchfluß. Ebenso wird es für zweckmäßig gehalten, bei Absinken des gemessenen Milchflusses die Pulsatorfrequenz zu erniedrigen, weil hierdurch die Massagefrequenz der Zitze erniedrigt würde. Eine hohe Massagefrequenz bei geringem oder keinem Milchfluß wird als nachteilig angesehen, da hierdurch Beschädigungen der Zitze auftreten könnten. Insgesamt erfolgt bei dem bekannten Verfahren jedoch eine Änderung der Parameter lediglich in Abhängigkeit von dem gemessenen Milchfluß.

Aus der DE-A-2 524 398 ist ferner ein Melkverfahren bekanntgeworden, bei dem entgegen dem

4

0 032 752

früher bekannten Verfahren nach DE-B-1 956 196 der Unterdruck in dem Innenraum des Zitzengummis erhöht ist, um sicherzustellen, daß tatsächlich Milch freigegeben wird, was nach den bis dahin bekannten Verfahren offensichtlich bei sehr schwer melkbaren Tieren (zähmelkbaren Tieren) nicht immer möglich war, weil das Melkvakuum zu Beginn des Melkvorganges zu niedrig war. Zur Schonung der Zitze wird jedoch zu Beginn des Melkvorganges, wenn noch keine oder nur wenig Milch fließt, ein entsprechend verringerter Unterdruck an den Pulsraum gelegt. Hierbei soll der in dem Pulsraum herrschende Unterdruck so bemessen sein, daß sich die Innenwand des Zitzengummis während der Saugperiode nicht mehr vollständig öffnet, so daß nur die Spitze der Zitze und nicht die gesamte Zitze dem Unterdruck ausgesetzt wird. Außerdem soll durch dieses Verfahren das Rückströmen von Milch zurück gegen die Zitze, das als gefährlicher Faktor bei der Mastitisübertragung erscheint, erheblich eingeschränkt werden. Bei diesem Vorgehen ist sichergestellt, daß auch in der Schonstufe selbst bei schwer melkbaren Tieren sicher Milch entzogen wird. Die Umsteuerung von der Eingangsphase, in der der Unterdruck im Pulsraum verringert ist, auf die Hauptmelkphase erfolgt sodann auch in Abhängigkeit von dem Milchstrom.

Aus der US-A-4 011 838 ist auch bereits ein Melkverfahren bekannt, bei dem in einer Stimulationsphase sowohl der Unterdruck im Innenraum des Zitzengummis wie in dem Pulsraum gegenüber den Unterdrucken während der Hauptmelkphase herabgesetzt sind. So werden als Unterdruck im Innenraum des Zitzengummis gemäß einer vorzugsweisen Ausführungsform 33 k Pa und im Pulsraum 27 k Pa als besonders geeignet für die Stimulationsphase angesehen. Bei diesen Drucken wird jeweils gewährleistet, daß bei normal melkbaren Kühen sofort nach der Tonuslockerung der Strichkanalmuskulatur d. h. nach ca. 5 bis 15 Sekunden Milch fließt. Dieser Vorgang ist völlig unabhängig vom Milchejektionsgeschehen, d. h. es fließt auch bei einer nicht stimulierten Kuh die Zisternenmilch. Dementsprechend erfolgt auch die Steuerung des Melkvorganges und somit die Umschaltung von der Stimulationsphase auf die Hauptmelkphase in Abhängigkeit von dem Milchfluß und insbesondere wenn dieser einen Wert von 0,2 kg pro Minute überschreitet. Lediglich bei schwer melkbaren Kühen ist als Hilfsmaßnahme vorgesehen, daß eine Umschaltung nach einer vorbestimmten Zeit von 61 Sekunden erfolgt, wenn bis zu diesem Zeitpunkt der Milchfluß den vorbestimmten Schwellwert nicht überschritten hat. Zusätzlich wird es für zweckmäßig erachtet, daß in der Stimulationsphase die Pulsfrequenz gegenüber der Pulsfrequenz in der Hauptmelkphase herabgesetzt wird.

Weiterhin ist aus der US-A-4 211 184 bereits ein Melkverfahren bekanntgeworden, bei dem das Ballooning-Problem, das Einschnüren der Zitzenbasis durch die Ringlippe des Zitzengummikopfes wie auch das Klettern des Melkbechers an der Zitze gelöst werden soll. Dies soll dadurch erreicht werden, daß die Höhe des Unterdrucks im Kopfraum des Zitzengummis gemessen wird und als Steuersignal für die Steuerung der Höhe des Unterdrucks im Pulsraum und zwar in dem Sinne verwendet werden soll, daß bei einer Erhöhung des Unterdrucks im Kopfraum eine Erniedrigung des Unterdrucks im Pulsraum resultiert, so daß der Zitzengummi in der Saugphase nicht mehr voll öffnet. Beiläufig wird auch erwähnt, daß die Einrichtung auch für die Anfangsstimulation verwendbar sei. Geht man jedoch nach der dort angegebenen Lehre vor, so ergibt sich, daß beim Ansetzen eines Melkbechers an eine noch nicht mit Milch gefüllte pralle Zitze, die Zitze noch nicht am Zitzengummischaft anliegt, während im Zitzengummiinnenraum bereits volles Melkvakuum anliegt. Unter diesen Bedingungen klettert der Melkbecher so weit an der Zitze hoch, bis seine kopfseitige Ringlippe an der Zitze Halt findet und gegen diese abdichten kann. Das ist in der Regel bei einer nicht angerüsteten Zitze erst in Höhe des Fürstenberg'schen Venenringes der Fall. Erst wenn der Melkbecher vollständig an der Zitze hochgeklettert ist, wird aufgrund des hohen Melkvakuums noch etwa 50 k Pa im Kopfinnenraum der Unterdruck in dem Pulsraum auf etwa 17 k Pa verringert. Durch diese Verringerung kann jedoch das einmal erfolgte Klettern des Melkbechers nachträglich nicht mehr rückgängig gemacht werden, so daß wie bereits in der nicht vorveröffentlichten deutschen Patentanmeldung P 3 001 963 (DE-B-3 001 963) beschrieben, durch die Einschnürung der empfindlichen Zitzenbasis in Höhe des Fürstenberg'schen Venenringes durch die Ringlippe des Zitzengummikopfes ein der Stimulation entgegenwirkender für die Kuh unangenehmer Druck auf die empfindlichen Druckrezeptoren an der Zitzenbasis ausgeübt wird. Hinsichtlich dieser Abschnürung der Zitzenbasis ist dieses bekannte Verfahren einer ganz normalen Melkmaschine, die an ein ebenfalls nicht angerüstetes Euter angesetzt wird, vergleichbar. Hinsichtlich der Reizsetzung dürfte eine normale Melkmaschine durch ihre wesentlich stärkere Zitzenmassage diesem Verfahren sogar eher überlegen sein.

Aus der DE-A-2 423 554 war auch bereits ein Melkverfahren sowie eine Vorrichtung bekannt, bei denen durch Einfügung eines gesteuerten Ventils in jeweils die Pulsatorleitungen zu den Pulsräumen der Melkbecher eine ungesteuerte Öffnungsbewegung des Zitzengummischlauches während der Melkphase verhindert werden soll, da durch diese Bewegung ein Rückfluß gegen die Zitze verursacht werden kann, welche eine Schlagkraft an der Zitzenspitze ergibt, was die Ursache von mechanischer Übertragung von Bakterien in das Innere der Zitzen an der Kuh sein kann. Aus diesem Grund wird zu Beginn eines Melkvorganges, solange der Milchfluß noch unter einem vorbestimmten Schwellwert bleibt, in jeder Pulsatorleitung ein den Querschnitt der Pulsatorleitung wesentlich verengendes Steuerorgan eingeführt, das lediglich einen geringen Querschnitt freiläßt. Dies führt dazu, daß sich in der Saugphase der Unterdruck in dem Melkbecherzwischenraum nur langsam aufbauen kann, während beim Umschalten von der Saugphase auf die Entlastungsphase schlagartig Luft einströmen kann, die

5

den Druck im Pulsraum praktisch schlagartig auf Atmosphärendruck erhöht. Ein solches Verfahren ist für eine Stimulation wenig geeignet, da auf die noch nicht stimulierte Zitze, die noch keine Milch führt, sehr hohe Kräfte ausgeübt werden, die zu Verletzungen in der Zitzenzisterne führen können.

Aus der DE-A-2 746 310 ist auch bereits ein Verfahren zum maschinellen Milchentzug mit Hilfe eines Zweiraummelkbechers bekanntgeworden, bei dem zur Verhinderung von Verletzungen der Zitze zu Beginn eines Melkvorganges, wenn sich die Zitze selbst noch im schlaffen Zustand befindet, der Pulsatorzwischenraum in dem Zweiraummelkbecher mit einem geringeren Unterdruck beaufschlagt wird als der Unterdruck im Inneren des Zitzengummis. Hierdurch wird gleichzeitig verhindert, daß Milch aus der Zitze austritt. Während dieser Anfangsphase erfolgt eine Anregung der Zitze dadurch, daß der Pulsator mit gleichbleibender Frequenz wie in der Hauptmelkphase weiterläuft, wobei der Druck jedoch lediglich zwischen Atmosphärendruck und dem verminderten Unterdruck in der Pulsatorzwischenkammer schwankt. Nach einer vorbestimmten Zeitspanne kann sodann der Unterdruck in der Pulsatorzwischenkammer allmählich bis zu seinem vollen Wert während der vollen Melkleistung erhöht werden. Eine Verbesserung des Milchflusses, des Ausmelkungsgrades und der Milchleistung konnte mit diesem Verfahren jedoch nicht erzielt werden. Vielmehr kam es lediglich zu einer Verlängerung der Gesamtmelkzeit.

Aus der DE-B-1 217 132 war bereits ein elektromagnetisch gesteuerter Pulsator mit zwei getrennt steuerbaren Elektromagnetventilen bekannt, die getrennt abwechselnd das Anlegen von Unterdruck bzw. Atmosphärendruck an einerseits die Leitungen zu den Melkbechern an den vorderen Zitzen und an die Leitungen zu den Melkbechern an den hinteren Zitzen eines Euters steuern. Die getrennte Steuerung erfolgt mit Hilfe jeweils einer durch einen Motor angetriebenen Steuerkurve, die zu bestimmten Zeiten den elektrischen Stromkreis zu einem Elektromagneten öffnet bzw. schließt. Hierdurch läßt sich die Pulsatorfrequenz wie auch die jeweilige Länge der Saug- und der Entlastungsphase innerhalb eines Pulsatortaktes für die vorderen und hinteren Zitzen getrennt steuern. Zusätzlich läßt sich die Form des Verlaufs des Unterdrucks innerhalb eines Pulsatortaktes dadurch steuern, daß etwa die Öffnungen, über die der Unterdruck bzw. der Atmosphärendruck in die Leitungen zu den Melkbechern gelangen kann, verschieden gewählt werden.

Aus dem DE-U-7 017 027 war auch bereits ein pneumatisch gesteuerter Pulsator bekannt, bei dem durch eine gemeinsame Stange verbundene Membranen die jeweils zwei Druckräume unterteilen, entsprechend dem in den jeweiligen Druckräumen herrschenden Druck verschiebbar sind. Der Druck in den entsprechenden Druckräumen, durch die die Membranen ausgelenkt werden, erfolgt über einen Steuerschieber, der die jeweiligen Druckräume abwechselnd mit einem Unterdruck bzw. Atmosphärendruck beaufschlagt. Durch die Bewegung der Membranen wird ein an der Verbindungsstange der Membranen befestigter Schieber mitgenommen, der jeweils abwechselnd eine erste zu den Melkbechern führende Pulsatorleitung mit Unterdruck und Atmosphärendruck beaufschlagt, während eine zweite zu den Melkbechern führende Pulsatorleitung im Gegentakt mit Atmosphärendruck bzw. Unterdruck beaufschlagt wird. Die Pulsatorfrequenz und der Anstieg und Abfall des Unterdrucks in jeweils einem Pulstakt können durch die Bemessung des Durchmessers der Leitungen bestimmt werden, über die der Unterdruck bzw. Atmosphärendruck abwechselnd über den Steuerschieber an die Druckkammern auf beiden Seiten der Membranen angelegt werden.

Die genannten Verfahren bringen zwar den Vorteil, daß für den Melker das Problem einer entsprechenden Zeitkoordination entfällt. Die genannten Verfahren bringen aber in der Praxis im Vergleich zur Handstimulation unbefriedigende Ergebnisse, insbesondere schlechte Euterentleerungen und lange Melkzeiten; diese Ergebnisse sind aber wider Erwarten äußerst ähnlich trotz der völlig unterschiedlichen Auslegungen der Stimulationsphase.

Der vorliegenden Erfindung liegt nunmehr die Aufgabe zugrunde, ein Verfahren zum maschinellen Milchentzug mit einer automatischen Stimulation anzugeben, durch das eine optimale Melkbereitschaft mit verbesserter Euterentleerung und erhöhter Laktationsleistung und eine gesteigerte Arbeitsproduktivität des Melkers erzielbar ist.

Gemäß einer ersten erfindungsgemäßen Lösung wird diese Aufgabe ausgehend von dem eingangs genannten Verfahren dadurch gelöst, daß während einer Zeit von 40 bis 90 Sekunden, vorzugsweise während einer Zeit von 40 bis 60 Sekunden, ab Beginn der Stimulationsphase keine Milch entzogen wird, daß erst unmittelbar hieran anschließend mit dem Milchentzug gemäß der Hauptmelkphase begonnen wird, und daß die Pulsatorfrequenz während der Stimulationsphase gegenüber der Hauptmelkphase erhöht wird.

Gemäß einer weiteren Lösung wird diese Aufgabe ausgehend von dem eingangs genannten Verfahren dadurch gelöst, daß während einer Zeit von 40 bis 90 Sekunden, vorzugsweise während einer Zeit von 40 bis 60 Sekunden, ab Beginn der Stimulationsphase keine Milch entzogen wird, daß erst unmittelbar hieran anschließend mit dem Milchentzug gemäß der Hauptmelkphase begonnen wird, und daß während der Stimulationsphase elektrische Impulse auf die Zitze gegeben werden.

Die elektrischen Impulse können mit Hilfe von Elektroden an die Zitze angelegt werden, die etwa auf der Innenseite des Zitzengummis angeordnet und mit elektrischen Zuleitungen nach außen verbunden sind. Wenn während der Stimulationsphase die elektrischen Impulse auf die Zitze gegeben werden, kann der Unterdruck in dem Raum des Zitzengummis auf derselben Höhe gehalten werden, wie während der Melkphase, während lediglich der Pulsator in seinem Entlastungstakt angehalten wird, d. h. daß also der Zwischenraum des Melkbechers unter Atmosphärendruck steht. Zum Übergang von der Stimulationsphase in die Melkphase braucht somit lediglich der Pulsator wieder in Lauf gesetzt zu werden.

Gemäß einer dritten erfindungsgemäßen Lösung wird ein Verfahren zum maschinellen Milchentzug, unter Verwendung eines Einraummelkbechers, bei dem zum Entziehen der Milch an dem Innenraum des an die Zitze angesetzten Melkbechers ein Unterdruck vorbestimmter Höhe angelegt wird, und während einer vorbestimmten Zeit vor der Hauptmelkphase auf die Zitze bei angesetztem Melkbecher stimulierend eingewirkt wird, angegeben, das sich dadurch auszeichnet, daß während einer Zeit von 40 bis 90 Sekunden, vorzugsweise von 40 bis 60 Sekunden, ab Beginn der Stimulationsphase keine Milch entzogen und erst unmittelbar hieran anschließend mit dem Milchentzug gemäß der Hauptmelkphase begonnen wird, daß während der Stimulationsphase ein lediglich die Haftung des Melkbechers an der Zitze bewirkender Unterdruck angelegt wird, und daß eine Stimulation durch Anlegen von elektrischen Impulsen von 5 bis 70 Hz an die Zitze erzielt wird.

Die elektrischen Impulse können etwa dadurch angelegt werden, daß auf der Innenseite des Einraumbechers Elektroden eingelegt oder auf die Innenseite aufgedampft sind, über die die elektrischen Impulse auf die Zitze geleitet werden.

Diese technische Lehre wurde aufgrund der folgenden Beobachtungen und Erkenntnisse gewonnen: Selbst beim Handmelken, das hinsichtlich seiner Stimulationswirkung dem natürlichen Milchentzug wohl am nächsten kommt, werden in bestimmten Schafhaltungen die Tiere zweimal kurz hintereinander gemolken (Ripasseo). Dabei beträgt das zweite Handgemelk bis zu 44% des vorangegangenen Handgemelks. Ersetzt man andererseits das nach dem Maschinenmelken bei Schafen heute übliche Handnachmelken durch ein nach kurzer Wartezeit erneutes Ansetzen der Maschine (double pose), so stellt man bei Assaf- und Awassi-Schafen keine Einbuße in der Milchleistung fest. Aus dieser Beobachtung wurde geschlossen, daß es offenbar nicht so sehr auf die Stimulationsart ankommt, sondern daß das kurze Intervall zwischen den Melkungen eine Hauptrolle spielt. Hieraus wurde zunächst geschlossen, daß das Schaf, das in der Regel einen ja höheren Stimulationsbedarf hat, als die Kuh, durchaus durch die Melkmaschine — ob mit oder ohne eine der bekannten Vorstimulationsphasen — einen adäquaten Stimulationsreiz erfährt. (Diese Annahme steht im Gegensatz zur allgemein vertretenen Meinung, daß ein Schaf nicht maschinell stimulierbar ist.) Aus dem geschilderten Sachverhalt wurde geschlossen, daß das eigentliche Problem bei der maschinellen Stimulation vielmehr in der Verzögerungszeit — in der Regel 30 bis 60 Sekunden — liegt, die vom Beginn der Stimulation bis zur vollen Wirkung der neuro-hormonellen Reaktion (Ejektion der Alveolarmilch) verstreicht.

Wird ein nicht vorstimuliertes Tier an die Melkmaschine angeschlossen, so wird offenbar anfangs die sogenannte Zisternenmilch, die ohne hormonales Zutun gemolken werden kann, entzogen. Diese Milch ist in der Zwischenmelkzeit — aufgrund des Sekretionsdruckes — aus den Alveolen abgetropft und ist lose in den unteren Hohlräumen des Euters gespeichert. Ist nun die Zisternenmilch, wie es bei Schafen mit einer Milchflußzeit von 30 bis 60 Sekunden meistens der Fall ist, ganz abgemolken, bevor die im Oberbereich der Milchdrüse wie in einem Schwamm gebundene Alveolarmilch durch die Ejektion ausgeschüttet und damit erst verfügbar gemacht wird, so ergibt sich ein Vorgang, der nicht nur äußerlich eine Analogie zum sogenannten Nachgemelk zeigt, sondern auch ähnliche anatomischphysiologische Ursachen hat.

Während des Melkentzugs nimmt der Euterinnendruck linear ab. Die Geschwindigkeit der Abnahme ist abhängig von der Milchentzugsgeschwindigkeit und der zur Verfügung stehenden, im Euter lose gespeicherten Milchmenge. Mit abnehmendem Euterinnendruck verengen sich die Milchgänge im Euter und vor allem das Lumen zwischen Zitzenzisterne und Drüsenzisterne in Höhe des Fürstenberg'schen Venenringes. Dieser Vorgang läuft so lange, bis in die Zitze von oben weniger nachfließen kann als durch den Strichkanal abgemolken wird. Dadurch geht das Melkvakuum in die Zitzenzisterne über, die Zitze wird zusammengesogen und verliert den Halt im Zitzenbecher, so daß dieser aufgrund des Melkvakuums hochklettert und den Milchfluß in die Zitze vollends unterbindet.

Gleichzeitig reiben in diesem Zustand die äußerst empfindlichen inneren Schleimhäute der Zitze aufgrund der Pulsierung gegeneinander. Diese Irritation führt neben der mechanischen Blockierung zu einer nervös gesteuerten Verengung der Milchabflußgänge im Euter, was in einer deutlichen Melkunwilligkeit der Tiere trotz nur teilweiser entleerter Milchdrüse zum Ausdruck kommt. Dieser Situation begegnet man bei Schafen in der Regel, weshalb nach dem Entzug der ersten im Euter frei vorhandenen Milchmenge zunächst eine Pause eingelegt und sodann nach einer Zwischenzeit von Hand nachgemolken wird.

Es wurde festgestellt, daß einige hochleistende Schafrassen (z. B. Prealpes du Sud) ihre Milch in zwei deutlich voneinander abgegrenzten Emissionen an die Melkmaschine abgeben, wobei der Milchfluß zwischenzeitlich bis nahe Null abfällt. Der erneute meist langsamere Anstieg der Milchflußgeschwindigkeit liegt etwa 40 Sekunden nach dem Melkbeginn. Bei diesen Tieren, die offenbar einen geringeren Stimulationsbedarf haben, erfolgt also die Ejektion wenigstens noch so rechtzeitig, daß eine vorzeitige totale Blockierung durch den wiederansteigenden Euterinnendruck gerade noch vermieden wird. Somit kann wenigstens ein Teil der Alveolarmilch noch mit der Maschine gewonnen werden, was den für eine befriedigende Euterentleerung notwendigen Aufwand an Handarbeit bereits deutlich verkleinert.

Auch bei nicht ausreichend vorstimulierten Kühen wurde häufig zwischenzeitlich ein deutlicher Rückgang des Milchflusses nach 30 bis 60 Sekunden beobachtet. Ein totaler Zusammenbruch des Milchflusses wurde aber selten gefunden. Dies erklärt sich dadurch, daß die Kuh bei etwa gleichgroßer Milchentzugsrate pro Zitze wie das Schaf eine größere Zisternenmilchmenge als dieses aufweist, so daß die Zisternenmilch meist noch nicht völlig abgemolken ist, bevor durch die Stimulationswirkung der Maschine die Alveolarmilch aus den oberen Bereichen freigegeben wird. Es wurde jedoch gefunden, daß offensichtlich grundsätzlich gilt, daß eine verspätet einsetzende Ejektion immer zu einem langsameren Melken und zu einer schlechteren Euterentleerung führt. Dafür dürften sich mehrere Gründe angeben lassen. Aufgrund des fehlenden erhöhten Euterinnendrucks zu Beginn des Melkens fehlt das Melkverlangen des Tieres, wodurch es nicht zur vollen Tonuslockerung der glatten Eutermuskulatur kommen kann. Zwar ergibt auch eine verspätete Ejektion eine Erhöhung des Euterinnendrucks, jedoch ist der Grad der Erhöhung aufgrund des bereits teilweise entleerten Speichervolumens in den unteren Hohlräumen des Euters niemals so groß wie bei einer Ejektion unmittelbar vor dem Melken. Außerdem kann eine solche verspätete Innendruckerhöhung nur teilweise die Verengung der Milchwege im Euter rückgängig machen, die durch den vorangegangenen zu schnellen Abbau des Euterinnendrucks in der ersten Melkminute verursacht wurde. Damit bleibt das Nachfließen der Milch aus den oberen Euterbereichen entsprechend erschwert. Die schlechte Euterentleerung wird noch verstärkt durch die mit der Melkdauer abnehmende hormonale Reizwirkung. Dieser Faktor spielt zumindest bei Kühen, die eine durchschnittliche Melkzeit von etwas mehr als 5 Minuten haben, eine wichtige Rolle.

Aus diesen Erkenntnissen muß die Folgerung gezogen werden, daß bei allen Milchtierrassen keine Milch entzogen werden darf, bevor das Tier nicht durch eine vollwertige Milchejektion und einen hohen Euterinnendruck melkbereit und melkinteressiert gemacht wurde. Ein Milchentzug während der Stimulationsphase muß deshalb zwangsläufig zu einer Herabsetzung der Milchmenge und den damit zusammenhängenden eingangs beschriebenen weiteren Folgen führen.

Wie sich aufgrund der Untersuchungen herausgestellt hat, ist es nicht notwendig, daß während der gesamten Stimulationsphase kontinuierlich stimuliert wird. Es hat sich herausgestellt, daß es auch ausreichend sein kann, wenn zu Beginn der Stimulationsphase stimuliert wird und die Stimulation sodann zunächst wieder unterbrochen wird. Wichtig ist, daß mit dem Milchentzug erst nach etwa 40 bis 60 Sekunden nach Beginn der Stimulation begonnen wird. So kann durchaus eine Stimulation auch ausreichend sein, bei der während etwa der ersten 30 Sekunden stimuliert wird und die Stimulation sodann während einer nachfolgenden Zeit von 10 bis 30 Sekunden unterbrochen wird, während mit dem Milchentzug erst nach Ablauf dieser Unterbrechungszeit begonnen wird.

Gemäß einer bevorzugten Durchführung des Verfahrens unter Verwendung eines Zweiraummelkbechers kann während der Stimulationsphase der Unterdruck in der Pulsatorleitung gegenüber der Milchentzugsphase so weit vermindert werden, daß der Zitzengummi auch während des sonstigen Saugtaktes in einem mehr als halbgeschlossenen Zustand verbleibt und den Entzug von Milch verhindert. Aufgrund des sich unter diesen Umständen einfaltenden Zitzengummis, das sich gegen die Zitze legt, kann der Melkunterdruck in gleicher Höhe aufrechterhalten bleiben wie während des Melkvorganges, ohne daß während der Stimulationsphase Milch entzogen wird. In dieser Phase wird auch bei schlaffer Zitze ein unerwünschtes Klettern des Melkbechers verhindert, da sich der Zitzengummi immer im mehr oder weniger eingefalteten Zustand befindet und lediglich oszilliert. Die Herabsetzung des Unterdrucks in der Pulsatorleitung kann etwa in einfacher Weise durch Begrenzung des Unterdrucks mittels eines Unterdruckbegrenzungsventils erfolgen, das an dem Melkbecher oder in der Pulsatorleitung angebracht ist und etwa ferngesteuert oder einfach zeitgesteuert betätigt wird. Sobald das Unterdruckbegrenzungsventil abgeschaltet wird, kann sodann der Unterdruck der Pulsatorleitung wieder seinen vollen Wert wie bei der Melkphase erreichen, wodurch die eigentliche Melkphase eingeleitet wird.

Neben der Herabsetzung des Unterdrucks während des Saugtaktes kann zusätzlich noch der Druck in den Entlastungstakten dadurch erhöht werden, daß die Pulsatorleitung an eine entsprechende Überdruckleitung angeschlossen wird. In diesem Falle ergibt sich eine besonders gute Massage der Zitze. Eine solche Ausführungsform erfordert jedoch eine etwas aufwendigere Steuerschaltung, da die Zitzen zunächst in den Melkbecher eingeführt sein müssen, bevor der Überdruck angeschaltet wird, da ansonsten die Zitzen aufgrund des Überdrucks nicht mehr in den Becher einführbar sind.

Die zusätzlich eingeleitete Druckluft kann einen Druck zwischen 1,3 und $1{,}7 \cdot 10^5$ Pa aufweisen.

Eine Stimulation kann auch derart durchgeführt werden, daß bei einem Zweiraummelkbecher der Melkbecherzwischenraum kontinuierlich unter einem Überdruck gehalten wird, der jedoch pulsiert wird. Die Grenzen des pulsierenden Überdrucks können hier etwa zwischen 1,2 und $1{,}7 \cdot 10^5$ Pa liegen. Bei dieser Art der Stimulation wird eine gute Massage der Zitze erreicht. Ferner kann ein Unterdruck im Innenraum des Zitzengummis zur Halterung des Melkbechers an der Zitze entfallen, wodurch die Zitze besonders geschont wird. In der Pulsatorleitung wäre ein entsprechendes Überdruckpulsatorventil vorzusehen, das für den normalen Milchentzug außer Betrieb gesetzt oder auf Durchgang geschaltet wird. Für den Milchentzug werden sodann die üblichen bekannten Melkparameter an dem Melkbecher eingestellt.

# 0 032 752

In bezug auf die Erhöhung der Pulsatorfrequenz während der Stimulationsphase hat sich bereits eine gute Stimulation ergeben, wenn die Pulsatorfrequenz auf etwa 100 bis 170 Zyklen pro Minute erhöht wurde, während für die sonstigen Pulsatordrucke wie auch den Unterdruck im Innenraum des Melkbechers die gleichen Werte beibehalten werden wie während der Melkphase. Bei einer Erhöhung der Pulsation auf solche Frequenzen verharrt der Zitzengummi aufgrund der Trägheit des Systems in einem mehr oder weniger geschlossenen, nur noch leicht oszillierendem Zustand.

Insgesamt wird durch die vorliegende Erfindung eine optimale Stimulation und damit eine optimale Milchabgabe erreicht. Dadurch, daß die Stimulation mit dem Melkzeug selbst ausgeführt werden kann und die Stimulationsphase in genauer zeitlicher Folge zu der eigentlichen, sich unmittelbar anschließenden Melkphase steht, ist gewährleistet, daß der Milchentzug erst beginnt, wenn eine vollwertige Stimulation erreicht worden ist und daß andererseits nicht erst mit dem Milchentzug begonnen wird, nachdem der Höhepunkt der Stimulation längst überschritten worden ist. Es hat sich herausgestellt, daß die Euterentleerung und Melkgeschwindigkeit jeweils aufgrund der optimalen Stimulation im wesentlichen vergrößert werden konnten. Für den Melker ergibt sich somit ein zweifacher Vorteil zum einen daraus, daß er selbst keine Stimulation an dem Tier mehr auszuführen braucht, sondern lediglich nur noch das Melkzeug anzuhängen braucht, und zum anderen daß sich aufgrund der guten Stimulation die Menge des Nachgemelks erniedrigt.

Das vorstehend beschriebene Melkverfahren führt bei den meisten Kühen zu hervorragenden Stimulationsergebnissen mit den sich daraus ergebenden oben angeführten eindeutigen Verbesserungen in mehrerer Hinsicht. Es hat sich ebenso herausgestellt, daß eine solche maschinelle Stimulation einer fachgerechten 60 Sekunden dauernden Handstimulation deutlich überlegen ist. Dies läßt sich wahrscheinlich dadurch erklären, daß sich bei der maschinellen Stimulation eine Addition der Stimulationswirkungen ergibt, was offensichtlich darauf beruht, daß bei der maschinellen Stimulation immer alle vier Zitzen gleichzeitig stimuliert werden, während bei der Handstimulation jeweils nur zwei Zitzen gleichzeitig stimuliert werden. Eine günstige Stimulation drückt sich — unabhängig von den quantitativ meßbaren Verbesserungen beim Milchentzug — bei den Kühen in der Regel in einem völligen ruhigen, »andächtigen« Stehen mit halbverschlossenen Augen und hängenden Ohren während der Stimulationsphase und der daran anschließenden Hauptmelkphase aus. Besonders sensible Tiere reagieren sogar oftmals mit einem längerfristigen Schwanzheben als Lustbezeugung.

Ein gewisser Teil der Kühe reagiert jedoch auf das vorbeschriebene Stimulationsverfahren weniger günstig. Hier zeigt sich zu Beginn der Stimulationsphase ebenfalls das ruhig »andächtige« Stehen, das zum Teil mit einer Schwanzhebung verbunden ist. Auch bei diesen Kühen werden die Euter und anschließend die Zitzen prall und verlängern sich. Alle diese Anzeichen deuten auf eine sehr wirksame Stimulation und eine optimale Melkwilligkeit hin. Bei diesen Kühen kommt es jedoch dann noch während der Stimulationsphase zu einem Rückgang der optimalen Melkwilligkeit. Es läßt sich in diesem Stadium eine deutliche Teilerschlaffung und eine Wiederverkürzung der Zitzen feststellen. Die Tiere werden gegen Ende der Stimulationsphase unruhig, während sie zu Beginn der Stimulation ruhig und »andächtig« standen. In seltenen Fällen wurde sogar ein Abschlagen des Melkzeugs gegen Ende der Stimulationsphase beobachtet. Dieses Erscheinungsbild war meist begleitet von einer nachfolgenden langsameren oder verzögerten Milchabgabe sowie verbunden mit einem steigenden Nachgemelk.

Durch langzeitige Untersuchungen wurde festgestellt, daß die o. g. Schwierigkeiten in der Tendenz häufiger bei den folgenden Umständen auftraten:

a) bei Kühen, die sich zum Teil bei der Vorbereitung zum Melken selbst anrüsten, d. h. bei denen vor Ansetzen des Melkzeuges bereits durch optische, akustische oder olfaktorische (z. B. Kraftfuttergabe im Melkstand) Reize bedingte Reflexe ausgelöst werden. Eine vollwertige Selbstanrüstung ist allerdings sehr selten zu beobachten;

b) bei Kühen, bei denen schon vor dem Melken trotz noch nicht erfolgter Milchejektion Milch abtropft (Leckkühe);

c) häufiger beim Morgenmelken als beim Abendmelken;

d) bei Kühen, die sehr schnell und stark auf die Stimulation reagieren;

e) bei Kühen, die sich im ersten Laktationsdrittel befanden häufiger als bei solchen im zweiten und vor allem im dritten Laktationsdrittel;

f) bei Kühen, die sich in der zweiten oder dritten Laktation befanden, gegenüber solchen in der ersten Laktation;

g) schließlich bei Kühen mit kleinem Euter und großer Milchleistung, d. h. sogenannten Baucheutern.

Nach einem längeren Rätselraten über den besonderen Verlauf der Stimulation in den o. g. Fällen wurde herausgefunden, daß sich in bestimmten Fällen offensichtlich zu einem Zeitpunkt, zu dem sich die Ocytocinausschüttung noch längst nicht voll ausgewirkt hat, ein sehr hoher Euterinnendruck einstellt, der auf den verschiedensten Gründen beruhen kann. Insbesondere wenn der (noch) zur Verfügung stehende Stapelraum in der Drüsenzisterne klein ist im Verhältnis zum Volumen der aus den Alveolen ausgepreßten Milch. (So kann das Verhältnis zwischen Alveolarvolumen und Drüsenzi-

9

sternenvolumen zwischen 30 : 70 und 70 : 30 bei den einzelnen Kühen schwanken.) Diese Euterinnendrücke können bis über 10 k Pa erreichen. Tritt jedoch ein solcher hoher Euterinnendruck auf, so wird dieser hohe Innendruck der Kuh offensichtlich unangenehm oder schmerzt sie sogar. Dies kann noch während der Stimulationsphase zu einer Ausschüttung des Hormons Adrenalin und damit zu einem sofortigen Nachlassen der Tonuslockerung der glatten Muskulatur im Euter führen, durch die die bis zu diesem Zeitpunkt bereits bewirkte Melkbereitschaft praktisch schlagartig wieder verlorengeht. Außerdem kann das Adrenalin die noch nicht durch Ocytocin besetzten Rezeptoren in der Alveolarmasse blockieren und damit eine vollwertige Milchejektion verhindern. Dieses ganze Geschehen kann im Ende manchmal so weit führen, daß sich die Kuh am Ende der Stimulationsphase in einem Zustand befindet, der ungünstiger ist als wäre sie nicht stimuliert worden.

Wie durch mehrere Reihenuntersuchungen festgestellt wurde, liegt der Euterinnendruck am Ende einer vollwertigen Stimulationsphase in der Regel bei etwa 3 bis 5 k Pa. Die Messungen zeigen allerdings eine große Spannweite des Euterinnendrucks von weniger als 1,5 k Pa bis über 11 k Pa.

Eine weitere erfindungsgemäße Lösung der gestellten Aufgabe wird deshalb ausgehend von einem Verfahren zum maschinellen Milchentzug, bei dem zum Entziehen der Milch an den Innenraum eines an eine Zitze angesetzten Melkbechers ein Unterdruck vorbestimmter Höhe angelegt wird und eine Pulsation eines Zitzengummis mit vorbestimmter Frequenz und Stärke durchgeführt wird und bei angesetztem Melkbecher in einer Stimulationsphase während einer vorbestimmten Zeit vor der Hauptmelkphase auf die Zitze stimulierend eingewirkt wird, darin gesehen, daß während der Stimulationsphase die Pulsation des Zitzengummis mit einer um wenigstens 50% gegenüber der Frequenz der Hauptmelkphase erhöhten Frequenz erfolgt und daß während dieses Zeitraumes der maximale Pulsunterdruck im Pulsraum des Melkbechers in Abhängigkeit von dem Unterdruck im Innenraum des Zitzengummis und dem Einfaltdruck des Zitzengummis so gewählt wird, daß er in dem durch die Formel:

$$\text{Pulsunterdruck} = 6 + \frac{\text{Unterdruck im Zitzengummiinnenraum}}{3} + \frac{\text{Einfaltdruck des Zitzengummis}}{4} \pm 5\,k\,Pa$$
(Stimulationsphase)

angegebenen Bereich liegt, und daß erst nach einiger Zeit von 40 bis 90 Sekunden, vorzugsweise nach einer Zeit von 40 bis 60 Sekunden, ab Beginn der Stimulationsphase mit dem Milchentzug entsprechend der Hauptmelkphase begonnen wird.

Mit diesem Verfahren wird durchgehend bei praktisch allen Kühen eine besonders günstige, d h. vollwertige Stimulation mit den sich daraus ergebenden günstigen Folgen erreicht. Dem Verfahren liegt die Erkenntnis zugrunde, daß es offensichtlich besonders günstig ist, wenn am Ende der Stimulationsphase, d. h. etwa nach 40 bis 90 Sekunden ab Beginn der Stimulation ein Euterinnendruck von etwa 3 bis 5 k Pa vorliegt. Das entspricht normalerweise einem mittleren Druckaustieg des Euterinnendruckes während der Stimulationsphase von etwa 2,5 bis 3,5 k Pa. Es hat sich herausgestellt, daß einerseits ein solcher Druckanstieg bis zum Ende der Stimulationsphase möglichst erreicht sein sollte, daß aber andererseits auch kein weiterer wesentlich darüber hinausgehender Druckanstieg erfolgen sollte, da ein solcher weiterer Euterinnendruckanstieg die Melkbereitschaft der Kuh wieder herabsetzen kann, da er der Kuh unangenehm werden oder sie sogar schmerzen kann. Bei einem schnellen und vor allem vorzeitigen Erreichen eines überhöhten Euterinnendrucks, also vor Ablauf einer Zeit von 40 bis 90 Sekunden nach Beginn der Stimulation, hat es sich nicht als zweckmäßig erwiesen, vorzeitig die Stimulation abzubrechen und die Hauptmelkphase einzuleiten. Für den Melkerfolg ebenso wie für die Langzeitwirkung ist es entscheidend wichtig, daß eine vollwertige Stimulationsphase mit einer Verzögerungszeit von 40 bis 90 Sekunden zwischen Stimulationsbeginn und Beginn der Hauptmelkphase durchgeführt wird. Das Stimulationsverfahren muß also so eingerichtet werden, daß möglichst alle Kühe am Ende der Stimulationsphase nach 40 bis 90 Sekunden einen Euterinnendruck von 3 bis 5 k Pa erreichen, daß jedoch ein weiterer wesentlicher Anstieg des Euterinnendrucks über diesen Druck hinaus vermieden wird.

Dies wird nun dadurch erreicht, daß der maximale Unterdruck im Pulsraum zwischen der »Saugphase« in Abhängigkeit von dem Unterdruck im Innenraum des Zitzengummis und dem Einfaltdruck des Zitzengummis in Verbindung mit einer Erhöhung der Pulsfrequenz entsprechend gewählt wird. Diese Maßnahme bewirkt, daß bis zu einem Euterinnendruck von etwa 3 bis 5 k Pa keine Milch entzogen wird, und bei einem darüberhinausgehenden Anstieg des Euterinnendrucks nur so viel Milch entzogen wird, daß dieser Euterinnendruck auf einem Innendruck von etwa 3 bis 5 k Pa über die Stimulationsphase gehalten wird. Damit wird vermieden, daß vor dem Beginn der Hauptmelkphase ein die Melkbereitschaft wieder herabsetzender überhöhter Euterinnendruck auftritt.

Der Innendruck im Inneren des Zitzengummis kann dabei auf der Höhe gehalten werden, wie sie etwa für die normale Hauptmelkphase verwandt wird. Der Unterdruck im Innenraum des Zitzengummis kann aber auch während der Stimulationsphase herabgesetzt werden. Das Verfahren selbst ist von der Höhe dieses Unterdrucks im Innenraum des Zitzengummis nicht abhängig, solange noch ein Unterdruck ausreichender Größe vorhanden ist, mit dem Milch abgeführt werden kann, sobald der Euterinnendruck den vorgenannten Wert überschreitet. Eine wichtige Größe für die Durchführung des Verfahrens stellt jedoch die Wahl der Druckdifferenz zwischen dem Innenraum des Zitzengummis und dem Pulsraum dar. Diese Druckdifferenz ergibt sich bei einem vorgegebenen Unterdruck im Innenraum des Zitzengummis aus der angegebenen Beziehung, jedoch ist sie selbstverständlich abhängig von der Steifigkeit des verwandten Zitzengummis. Es hat sich als zweckmäßig erwiesen, als Vergleichsgröße für die Steifigkeit eines Zitzengummis den Einfaltdruck zu verwenden. Unter dem Einfaltdruck wird hierbei die Druckdifferenz zwischen dem Innenraum des Zitzengummis und dem Pulsraum verstanden, die den Zitzengummi so weit einfaltet, daß sich an einer Stelle eine Berührung zweier gegenüberliegender Wände ergibt. Geht man etwa von gleichem Unterdruck im Innenraum des Zitzengummis und dem Pulsraum aus, und vermindert den Unterdruck im Pulsraum, so führt dies dazu, daß sich die Innenwand des Zitzengummis mehr und mehr an die Zitze anschmiegt, bis schließlich bei einem weiteren Absenken des Unterdrucks im Pulsraum des Zitzengummis kollabiert, d. h., daß zwei einander gegenüberliegende Innenwände des Zitzengummis in einem Abstand unterhalb der Zitze zur Anlage gegeneinander kommen. In diesem Zustand des Zitzengummis bleibt normalerweise noch ein etwa im Querschnitt einer gestreckten Acht entsprechender Druck frei, wodurch nach wie vor Milch abfließen kann. Je steifer nun ein Zitzengummi ist, desto größer kann die Keilkraft sein, die von der Gummiwandung auf die Zitzenspitze zum Zwecke des Schließens, d. h. des Zuhaltens, des Strichkanals übertragen werden kann. Ein sehr weicher Gummi (niedriger Einfaltdruck) kann zwar leicht durch eine verhältnismäßig geringe Druckdifferenz zusammengedrückt werden, jedoch ist die Keilkraft, die er auf die Zitzenspitze in etwa radialer Richtung ausüben kann, gering. Ein solcher weicher Gummi legt sich vielmehr nur sanft um die Zitzenspitze herum und daraus ergibt sich im wesentlichen ein von allen Seiten wirkender Druck auf die Zitzenspitze, jedoch keine radial wirkende Keilkraft. Untersuchungen haben gezeigt, daß zur Erzielung einer bestimmten Schließkraft auf die Zitzenspitze bei sonst gleichen Bedingungen die Druckdifferenz zwischen Pulsraum und Innenraum des Zitzengummis zur Erzielung einer gleichgroßen Schließkraft an der Zitzenspitze bei einem weichen Gummi mit niedrigem Einfaltdruck (6 k Pa) um etwa 10% höher liegen muß, als bei einem steifen Gummi mit hohem Einfaltdruck (15 k Pa).

Für die Bestimmung der notwendigen Druckdifferenz zwischen Unterdruck im Pulsraum in der »Saugphase« und dem Unterdruck im Innenraum des Zitzengummis derart, daß der Euterinnendruck während der Stimulationsphase auf einem Wert von etwa 3 bis 5 k Pa gehalten werden kann, während ein darüber hinaus ansteigender Euterinnendruck durch Milchabgabe auf den genannten Euterinnendruck zurückgeführt wird, wurde davon ausgegangen, daß während der Stimulationsphase mit einem Unterdruck im Zitzengummiinnenraum gearbeitet wird, der etwa im Bereich zwischen 20 und 51 k Pa liegt und daß Zitzengummis verwandt werden, die einen Einfaltdruck aufweisen, der etwa zwischen 5 und 15 k Pa liegt.

Für die Stimulation kommt es nicht so sehr auf die Art der Stimulation an, solange sichergestellt ist, daß ein Minimum an Reizniveau erreicht wird. Dieser Minimumwert kann stark schwanken. Wird nun entsprechend dem erfindungsgemäßen Verfahren die Zitzengummibewegung, d. h. die Amplitude der Bewegung herabgesetzt, um auf diese Weise eine Milchflußbegrenzung zu erreichen, so hat sich ergeben, daß unter diesen Umständen keine optimale Stimulation mehr erfolgen kann. Gemäß der Erfindung wurde nun gefunden, daß aber auch unter diesen Umständen eine optimale Stimulation dann erhalten werden kann, wenn die Pulsfrequenz entsprechend gesteigert wird. Es hat sich herausgestellt, daß eine kleine Zitzengummibewegungsamplitude und eine höhere Pulsfrequenz gegenüber einer vollen Zitzengummibewegung und niedriger Frequenz vor allem eine bessere Tonuslockerung der Euter und speziell der Strichkanalmuskulatur ergibt. Dies bedeutet, daß man bei zunehmender Pulsfrequenz den Druck auf die Zitze normalerweise eher verstärken muß, um den Milchfluß entsprechend stark zu begrenzen. Es hat sich nun, insbesondere bei höheren Frequenzen (ab 120 Zyklen pro Minute) als sehr vorteilhaft erwiesen, die Flankenwinkel der Pulskurve in der Stimulationsphase möglichst flach zu wählen, d. h. aus der üblicherweise mehr rechteckigen Pulskurvenform während der Stimulationsphase eine mehr sägezahnförmige oder direkt dreieckige oder sogar gleichschenkligdreieckige Kurvenform zu machen. Je flacher der Anstieg bzw. Abfall des Pulsunterdruckes ist, um so mehr werden die Impulse verringert, die auf die Zitze einwirken. Außerdem kann der Gummi besser den Druckschwankungen folgen, so daß die Gefahr einer unkontrollierten und harten Gummibewegung (snappy pulsation) ausgeschlossen wird. Hinzu kommt der Vorteil, daß sich durch die Dreiecksform der Pulskurve der Saugphasenanteil in der Regel deutlich verkleinert und daß der Zeitraum der geringsten Druckbelastung der Zitzenspitze sich sehr stark verkürzt. Damit kann der Unterdruck im Pulsraum vergrößert werden, ohne daß dabei mehr Milch fließt. Über diesen Kunstgriff läßt sich die Amplitude der Zitzengummibewegung und damit der Stimulationsreiz bei gleichbleibendem Milchfluß vergrößern.

Die Verbesserung der Tonuslockerung durch höhere Pulsfrequenzen und die Verringerung der Saugkraft an der Zitzenspitze durch die flachen Flankenwinkel gleichen sich weitgehend aus. Tendenzmäßig muß der Druck auf die Zitze bei Erhöhung der Frequenz jedoch eher etwas erhöht werden. Als besonders günstige Pulsfrequenz haben sich 140 bis 280 Zyklen pro Minute erwiesen. Kurzfristig erscheint eine möglichst intensive Stimulation, d. h. hohe Pulsfrequenz (bis 450 Zyklen pro Minute),

11

und eine nicht zu kleine Amplitude am geeignetsten. Es gibt jedoch Anzeichen dafür, daß eine etwas weniger intensive Stimulation vorzuziehen ist, um die Gefahr einer gewissen Überstimulation oder Gewöhnung auch langfristig auszuschalten. Das erfindungsgemäße Verfahren ist nicht nur auf Kühe, sondern in gleicher Weise auch auf Schafe und Ziegen anwendbar, wobei in diesem letzteren Falle jedoch eher die sich aus der obigen Formel ergebenden niedrigeren Werte für die Druckdifferenz anzuwenden sind.

Die obengenannten Überlegungen bezogen sich auf einen sogenannten Zweiraumbecher, d. h. auf einen Melkbecher mit einem Zitzengummieinsatz, bei dem zwischen dem Zitzengummi und dem Melkbechergehäuse ein Zwischenraum zum Anschluß an einen Pulsator gebildet wird. Das erfindungsgemäße Verfahren ist jedoch auch mit einem sogenannten Einraummelkbecher durchführbar, d. h. einem Melkbecher, bei dem kein Wechsel von Saugtakt und Entlastungstakt stattfindet, sondern die Zitzenspitze ohne Zitzengummimassage vielmehr kontinuierlich einem Unterdruck ausgesetzt ist. In diesem Falle muß bei angesetztem Melkbecher während der Stimulationsphase der Unterdruck im Melkbecher so gewählt werden, daß sich trotz des angelegten Unterdrucks der gewünschte Euterinnendruck an der Stimulationsphase aufbauen kann.

Eine weitere erfindungsgemäße Lösung der gestellten Aufgabe wird deshalb in einem Verfahren zum maschinellen Milchentzug, bei dem zum Entziehen der Milch an dem Innenraum eines an einer Zitze angesetzten Einraummelkbechers ein Unterdruck vorbestimmter Höhe angelegt wird und bei angesetztem Melkbecher in einer Stimulationsphase während einer vorbestimmten Zeit vor der Hauptmelkphase auf die Zitze stimulierend eingewirkt wird, gesehen, das sich dadurch auszeichnet, daß während der Stimulationsphase ein Pulsvolumen am oberen Rand des Einraumbechers mit einer Frequenz von mehr als 50% der Frequenz in der Hauptmelkphase pulsiert wird, und daß während dieses Zeitraumes der Unterdruck im Innenraum des Zitzengummis auf etwa 18 bis 25 k Pa begrenzt wird, und daß erst nach einer Zeit von 40 bis 90 Sekunden und vorzugsweise nach einer Zeit von 40 bis 60 Sekunden ab Beginn der Stimulationsphase mit dem Milchentzug entsprechend der Hauptmelkphase begonnen wird.

Zur Stimulation ist es nicht notwendig, daß an der Zitze während der gesamten Stimulationsphase eine Pulsation ausgeführt wird. Vielmehr kann eine solche Pulsation lediglich während eines Teils der Stimulationsphase, d. h. zu Beginn der Stimulationsphase, ausgeführt werden. Wird die Pulsation etwa für den Rest der Stimulationsphase abgeschaltet, so sollte jedoch darauf geachtet werden, daß sich der Melkbecher sodann in der »Saugphasenstellung« befindet und daß, da er sich im statischen Zustand befindet, eine ausreichende Druckdifferenz zwischen Innenraum des Zitzengummis und Pulsraum vorliegt.

Die Einstellung der Druckdifferenz zwischen dem Innenraum des Zitzengummis und dem Pulsraum kann auf einfache Weise mittels eines Unterdruckbegrenzungsventils erfolgen, das etwa in die Pulsatorverbindungsleitung eingeschaltet wird.

Die Stimulation kann auch derart erreicht werden, daß auf den Pulsraum des Melkbechers während der Stimulationsphase ein pulsierender Druck gegeben wird, der nicht nur bis auf Atmosphärendruck, sondern auf einen Überdruck ansteigt. Hierbei kann der Überdruck etwa zwischen 0 und 25 k Pa liegen. Dadurch daß der Druck im Pulsraum nunmehr zwischen einem maximalen Unterdruck und einem oberen Überdruck verändert wird, erreicht man eine vergrößerte Reizwirkung auf die Zitze, die bei weniger sensiblen und weniger durchgezüchteten Kühen von Vorteil sein kann.

Zur Durchführung der oben beschriebenen Verfahren hat sich eine Vorrichtung der eingangs erwähnten Art als zweckmäßig erwiesen, die sich dadurch auszeichnet, daß in der zu der Unterdruckquelle führenden Hauptleitung eine eine erste steuerbare Durchlaßöffnung aufweisende Shuntleitung vorgesehen ist, daß eine die einstellbare Drossel umgehende Bypassleitung vorgesehen ist und daß in der Hauptleitung eine durch die Shuntleitung umgangene und während der Stimulationsphase verschließbare erste Absperrvorrichtung und in der Bypassleitung eine während der Hauptmelkphase verschließbare zweite Absperrvorrichtung vorgesehen sind. Durch eine derartige Ausgestaltung lassen sich die während der Stimulationsphase gegenüber der Hauptmelkphase veränderte Pulsfrequenz sowie der in dem Pulsraum auftretende Unterdruck leicht und genau einstellen, ohne daß wesentliche Abänderungen an den bereits vorliegenden Pulsatoren vorgenommen werden müssen.

Ferner ist es für viele Anwendungen zweckmäßig, in der Leitung für die atmosphärische Zuluft zu der Umsteuervorrichtung des Pulsators eine dritte, in der Stimulationsphase verschließbare Absperrvorrichtung vorzusehen und eine die Absperrvorrichtung umgehende zweite Shuntleitung mit einer zweiten steuerbaren Durchlaßöffnung vorzusehen. Auf diese Weise lassen sich die Steigung der Anstiegsflanke sowie der Abfall der Kurve des Unterdrucks im Pulsraum genau und beliebig und insbesondere so einstellen, daß sowohl der Flankenanstieg wie auch Flankenabfall einander gleich sind oder daß etwa eine Art Nadelimpuls mit verhältnismäßig steilem Flankenanstieg und -abfall erhalten wird.

Gemäß einer zweckmäßigen Ausgestaltung wird die erste Absperrvorrichtung in der Hauptleitung durch ein Membranventil gebildet, dessen Steuerseite sowohl mit einer Leitung für die atmosphärische Zuluft wie über eine Drossel mit der Unterdruckquelle verbunden ist. Gemäß einer anderen Weiterbildung kann die zweite Absperrvorrichtung eine pneumatisch steuerbare Membran umfassen, deren Steuerseite sowohl mit einer Leitung für atmosphärische Zuluft wie über eine Drossel mit der Unterdruckquelle verbunden ist. In diesen Fällen läßt sich eine besonders einfache Zeitsteuerung der Stimulationsphase und eine zeitliche Umschaltung auf die Hauptmelkphase dadurch erreichen, daß in der Leitung für die atmosphärische Zuluft eine vierte, in Abhängigkeit von einer Vorwahlzeitsteuerung schließbare Absperrvorrichtung vorgesehen wird.

Zur Durchführung der oben beschriebenen Verfahren kann auch eine Vorrichtung mit einem mit einer Unterdruckquelle einerseits und zu den Pulsräumen der Melkbecher führenden Pulsatorleitungen andererseits verbundenen elektromagnetisch steuerbaren Pulsator vorgesehen werden, die sich dadurch auszeichnet, daß in der von der Unterdruckquelle zu den Pulsatorleitungen führenden Leitung ein erstes und zweites elektromagnetisches Ventil angeordnet sind, daß eine das erste elektromagnetische Ventil umgehende Bypassleitung mit einer einstellbaren Drossel vorgesehen ist, und daß das zweite elektromagnetische Ventil in einer ersten Stellung die Verbindung zwischen der Unterdruckquelle und den Pulsatorleitungen verschließt und die Pulsatorleitungen mit der Atmosphäre verbindet und in einer zweiten Stellung die Pulsatorleitung mit der Unterdruckquelle verbindet und die Verbindung der Pulsatorleitungen mit der Atmosphäre unterbricht.

Im folgenden soll die Erfindung näher anhand der Zeichnung erläutert werden. In der Zeichnung zeigt

Fig. 1 schematisch einen gemäß der Erfindung ausgebildeten Pulsator, und

Fig. 2 ein Beispiel für den Verlauf des Unterdrucks im Pulsraum mit der Zeit, wobei auf der Ordinate der Unterdruck in Kilopascal abgetragen und auf der Abszisse die Zeit aufgetragen ist. (Konstanter Unterdruck im Innenraum des Zitzengummis 50 k Pa; maximaler Unterdruck im Pulsraum 24 k Pa; Frequenz gleich 200 Zyklen pro Minute), und

Fig. 3 in einer ausgezogenen Kurve eine ähnliche Darstellung wie in Fig. 2 mit den Werten: konstanter Unterdruck im Innenraum des Zitzengummis von 43 k Pa; maximaler Unterdruck im Pulsraum: 22,5 k Pa; Frequenz: 240 Zyklen pro Minute. Zusätzlich ist im Vergleich in gestrichelter Darstellung die normale Pulskurve während der Hauptmelkphase dargestellt,

Fig. 4 schematisch einen in der Funktionsweise ähnlichen Pulsator wie in Fig. 1, der jedoch elektrisch gesteuert wird.

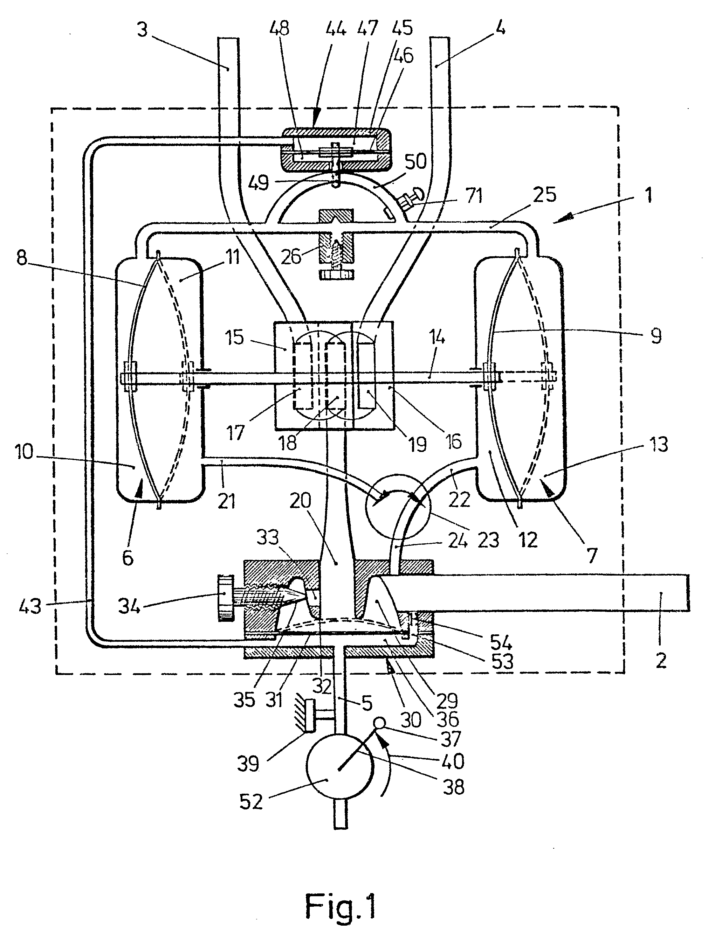

In Fig. 1 ist schematisch ein Pulsator 1 dargestellt, der eine Verbindungsleitung 2 zu einer Unterdruckquelle, zwei zu den Pulsräumen von Melkbechern (nicht dargestellt) führenden Leitungen 3 und 4, sowie eine Zuleitung 5 für atmosphärische Zuluft aufweist. Als Hauptbestandteil weist der Pulsator zwei Druckdosen 6 und 7 auf, die jeweils durch Membranen 8 und 9 in jeweils zwei Räume 10 und 11 bzw. 12 und 13 unterteilt sind. Die Membranen sind durch eine mit ihren Enden mittig an den Membranen befestigte Stange 14 verbunden. An der Stange 14 ist ein Schieber 15 befestigt, der auf einer Platte 16 gleitet, in der parallel zueinander und senkrecht zu der Achse der Stange 14 verlaufende Schlitze 17, 18, 19 ausgebildet sind. Die beiden außenliegenden Schlitze 17 und 19 sind mit der Leitung 3 bzw. der Leitung 4, die zu den Pulsräumen führen, verbunden, während der mittlere Schlitz 18 dichtend mit einer Leitung 20 verbunden ist, die mit der Verbindungsleitung 2, die zu einer nicht dargestellten Unterdruckquelle führt, in Verbindung steht.

Die beiden Räume 11 und 12 der Druckdosen 6 und 7 sind jeweils über Leitungen 21, 22 mit einem an sich bekannten Steuerwerk 23 verbunden. Das Steuerwerk 24 steht über eine Leitung 24 mit der Leitung 2 zu der Unterdruckquelle in Verbindung. Die beiden Räume 10 und 13 der Druckdosen 6 und 7 sind über eine Verbindungsleitung 25 verbunden, in der eine einstellbare Drossel 26 etwa in Form eines in die Leitung vorstehenden verschraubbaren Dosierstiftes liegt. Die einstellbare Drossel dient zur Veränderung des Durchgangsquerschnitts der Verbindungsleitung 25.

Der bisher beschriebene Pulsator ist mit Ausnahme der Zuleitung 5 für atmosphärische Zuluft bekannt.

Gemäß der Erfindung ist nun die Verbindung zwischen der Leitung 2 und der Leitung 20 derart ausgebildet, daß die Leitung 2 in einem Ringraum 29 in einem Steuergerät 30 mündet. Der Ringraum ist zur selben Seite hin wie das Ende der Leitung 20 geöffnet und beide Öffnungen können durch eine Membran 31 verschlossen werden, wenn diese gegen eine Fläche 32 anliegt. Befindet sich die Membran 31 in einer unausgelenkten Stellung, so steht das Ende der Leitung 20 mit dem Ringraum 29 und über diesen mit der Leitung 2 in Verbindung. Parallel zu dieser Verbindung liegt ein die Leitung 20 und den Ringraum 29 verbindende Durchgangsöffnung 33. Der Durchtrittsquerschnitt dieser Öffnung 33 kann mit Hilfe einer Steuerschraube 34 mit einer vorderen konischen Fläche 35 eingestellt werden. Die Durchgangsöffnung 33 in Verbindung mit der Steuerschraube 34 bilden ein Unterdruckreduzierventil.

Auf der dem Ende der Leitung 20 abgewandten Seite der Membran 31 ist ein weiterer Raum 36 gebildet, in dem die Zuleitung 5 für atmosphärische Zuluft mündet. Die Zuleitung 5 für atmosphärische Zuluft ist normalerweise geöffnet. Diese Verbindungsleitung besteht vorzugsweise aus einem biegsamen Schlauch. Dieser kann durch das Ende 37 eines Hebels 38 abgeklemmt und damit verschlossen werden, wenn das Ende 37 den Schlauch der Leitung 5 gegen eine festliegende Anlage 39 drückt. Der Hebel 38 ist Teil einer Zeituhr, die auf eine bestimmte Vorlaufzeit entsprechend der Länge der Stimulationsphase voreingestellt werden kann. Während des Ablaufs der voreingestellten Zeit wird der Hebel 38 im Gegenuhrzeigersinn in Richtung des Pfeiles 40 verdreht und der Hebel 38 kommt am Ende der vorbestimmten Zeit sodann zur Anlage gegen die Leitung 5.

Der Raum 36 des Steuergerätes 30 ist ferner über eine Leitung 43 mit einer pneumatischen

13

Schlauchklemme 44 verbunden. Die Schlauchklemme 44 besteht aus einem Druckdosengehäuse 45, das durch eine Membran 46 in zwei Räume unterteilt wird. In dem Raum 47 mündet die Leitung 43. Der Raum 48 ist gegen die Atmosphäre hin geöffnet, da sich durch die Wandung des Gehäuses ein Haken 49 erstreckt, der an der Membran 46 befestigt ist. Der Haken 49 hintergreift mit seinem gebogenen Ende eine in Form eines biegsamen Schlauches ausgebildete Bypassleitung 50, die eine Umgehungsleitung für die einstellbare Drossel 26 in der Verbindungsleitung 25 darstellt. Die Bypassleitung 50 kann ihrerseits mit einer einstellbaren Drossel 71 ausgestattet sein.

In dem Steuergerät 30 ist ferner noch eine Verbindungsleitung 53 zwischen der Leitung 2 und dem Raum 36 vorgesehen. In dieser Verbindungsleitung 53 liegt eine Drossel 54, die einen wesentlich geringeren Querschnitt als die Leitung 5 aufweist.

Die Funktionsweise des Pulsators ist wie folgt:

Zu Beginn einer Stimulationsphase wird die Zeituhr 52 durch Verdrehung des Hebels 38 im Uhrzeigersinn auf die vorbestimmte Stimulationszeit eingestellt. Hierbei wird die Verbindungsleitung 5 geöffnet, so daß Atmosphärendruck in dem Raum 36 des Steuergerätes 30 und über die Leitung 43 auch in dem Raum 47 der pneumatischen Schlauchklemme 44 herrscht. In diesem Zustand gibt die pneumatische Schlauchklemme 44 die Bypassleitung 50 frei. Ferner ist in dem Steuergerät 30, da auf den beiden verschiedenen Seiten der Membran 31 einerseits Atmosphärendruck und auf der anderen Seite ein Unterdruck über die Leitung 2 herrscht, die Membran 31 derart ausgelenkt, daß sie gegen die Fläche 32 anliegt und damit den direkten Durchgang zwischen der Leitung 2 über den Ringraum 29 zu der Leitung 20 verschließt. In diesem Falle kann somit der Unterdruck aus der Leitung 2 lediglich nur noch über den Ringraum 29 und die Durchgangsöffnung 33 in die Leitung 20 und über den Schlitz 18 wechselweise in eine der Pulsleitungen 3 und 4 gelangen.

Für eine korrekte Arbeitsweise des Steuerwerks 23 ist es wichtig, daß dieses unmittelbar mit der zu der Unterdruckquelle führenden Leitung 2 und nicht mit der Leitung 20 verbunden ist. Durch das Steuerwerk 23 wird der in der Leitung 2 herrschende Unterdruck von der Unterdruckquelle über die Leitung 24 abwechselnd über die Leitung 22 in den Raum 12 bzw. über die Leitung 21 in den Raum 11 der Druckdosen 7 bzw. 6 eingeleitet. Dementsprechend werden die Membranen 8 und 9 und die daran befestigte Stange 14 wechselweise nach rechts und links ausgelenkt. Das Fluid, das sich in den Räumen 13 und 10 der Druckdosen 6 und 7 befindet, kann sich hierbei über die Verbindungsleitung 25 und insbesondere über die Bypassleitung 50, die zu diesem Zeitpunkt offen ist, ausgleichen. Aufgrund der geöffneten Bypassleitung 50 kann dieser Ausgleich sehr schnell erfolgen, so daß eine sehr schnelle Hin- und Herbewegung der Stange 20, d. h. eine hohe Pulsationsfrequenz ermöglicht wird. Durch die einstellbare Drossel 71 in der Bypassleitung 50 kann die gewünschte Pulsationsfrequenz in der Stimulationsphase eingestellt werden. Bei jeder Hin- und Herbewegung der Stange 14 wird der an dieser befestigte Schieber 15 hin- und herbewegt, wodurch etwa in der in der Zeichnung dargestellten linken Endstellung des Schiebers die Schlitze 17 und 18 miteinander verbunden werden, so daß der Unterdruck aus der Leitung 20 in die Pulsatorleitung 3 gelangen kann, während Atmosphärendruck über den freiliegenden Schlitz 19 in die Pulsatorleitung 4 gelangen kann. In der rechten Endstellung der Stange 14 liegt sodann der Schieber 15 derart, daß er eine Verbindung zwischen den Schlitzen 18 und 19 der Platte 16 bewirkt, wodurch der Unterdruck aus der Leitung 20 in die Pulsatorleitung 4 gelangen kann, während nunmehr der Schlitz 17 freiliegt, so daß Atmosphärendruck in die Pulsatorleitung 3 gelangt.

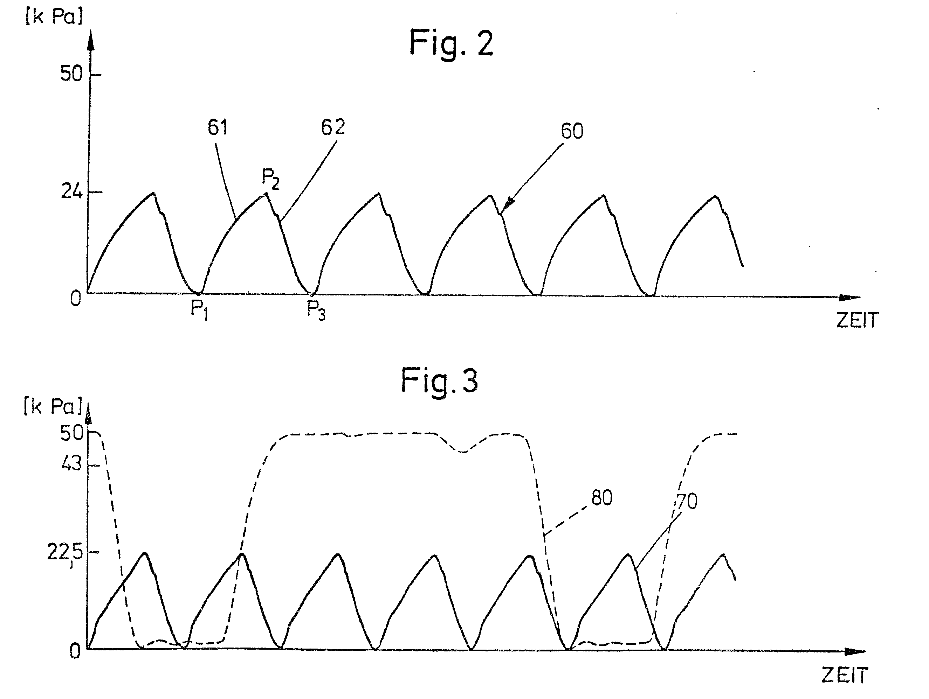

Durch die Einstellung der Größe der Durchgangsöffnung 33 wird bestimmt, wie schnell sich ein Unterdruck in der Leitung 20 aufbauen kann und gleichzeitig damit auch, welche Höhe dieser Unterdruck erreichen kann, bevor bereits wieder eine Umsteuerung durch eine Verschiebung der Stange 14 stattfindet. Auf diese Weise kann genau die Flankensteigung beim Anstieg des Unterdrucks im Pulsraum mit der Zeit eingestellt werden. Eine Einstellung der Steigerung des Flankenabfalls der Pulsatorkurve, wie sie näher in den Fig. 2 und 3 gezeigt sind, kann in ähnlicher Weise durch eine gezielte Einstellung der atmosphärischen Zuluft zu den Schlitzen 17 bzw. 19 erfolgen. Eine solche Vorrichtung ist einfach herzustellen und ist deshalb nicht ausführlicher noch dargestellt.

Am Ende der Stimulationsphase, deren Zeit durch die Zeituhr 52 eingestellt ist, kommt das Ende 37 des Hebels 38 zur Anlage gegen den Schlauch der Verbindungsleitung 5, wodurch der Schlauch abgeklemmt wird und damit die atmosphärische Zuluft unterbunden wird. Ab diesem Zeitpunkt kann sich nunmehr in dem Raum 36 des Steuergerätes 30 der Unterdruck aus der Leitung 2, über die Drossel 54 aufbauen. Sobald in dem Raum 36 der gleiche Unterdruck erreicht ist wie in der Leitung 2, kommt die Membran 31 in ihre unausgelenkte Lage, wodurch eine Verbindung mit großem Querschnitt zwischen der Leitung 2 über den Ringraum 29 mit der Unterdruckleitung 20 hergestellt wird. Dadurch wird bewirkt, daß sich jeweils bei einer Umsteuerung des Schiebers 15 in verhältnismäßig kurzer Zeit ein hoher Unterdruck in der Leitung 3 bzw. der Leitung 4 und somit in den entsprechenden Pulsräumen der Melkbecher aufbauen kann, wobei die Höhe des Unterdrucks in den Saugphasen jeweils dem Melkvakuum entspricht.

Während sich der Unterdruck in dem Raum 36 des Steuergerätes 30 ausbildet, setzt sich dieser auch über die Leitung 43 in den Raum 47 fort und bewirkt, daß die Membran 46 in der Fig. 1 nach aufwärts ausgelenkt wird. Hierdurch wird der Haken 49 nach aufwärts gezogen, wodurch er den Schlauch 50 gegen die Außenseite der pneumatischen Schlauchklemme zieht und damit den Schlauch 50 ab-

**0 032 752**

klemmt. Hierdurch ist die Bypassleitung 50 verschlossen. In diesem Stadium kann somit ein Druckausgleich zwischen den Räumen 10 und 13 der Druckdosen 6 und 7 nunmehr über die Leitung 25 und die einstellbare Drossel 26 erfolgen. Die Drossel 26 ist jedoch von vornherein so eingestellt, daß der Pulsator lediglich nur noch mit einer Frequenz von etwa 60 Zyklen pro Minute schwingen kann. Diese Frequenz entspricht der üblichen Pulsationsfrequenz während der Hauptmelkphase.

Der erfindungsgemäße Pulsator ermöglicht also eine genaue Einstellung der Melkparameter während der Stimulationsphase und gleichzeitig eine automatische Umschaltung nach Ablauf der Zeit für die Stimulationsphase auf die Melkparameter in der Hauptmelkphase.

Das Steuergerät 30 muß nicht unbedingt in der Leitung 2 zu der Unterdruckquelle angeordnet sein. Vielmehr könnten auch je ein solches Steuergerät in der Pulsatorleitung 3 und 4 angeordnet sein (Wechseltaktbetrieb). Bei Gleichtaktbetrieb wäre lediglich ein Steuergerät für alle Pulsatorleitungen gemeinsam nötig. Ein Vorteil dieser Anordnungen würde darin bestehen, daß die vorhandenen Pulsatoren praktisch kaum verändert zu werden brauchten.

In den Fig. 2 und 3 ist der Verlauf des Drucks in dem Pulsraum eines Melkbechers, dessen Pulsation mit dem in Fig. 1 gezeigten Pulsator gesteuert wird, in der Stimulationsphase gezeigt.

In Fig. 2 ist auf der Ordinate der Unterdruck in dem Pulsraum in k Pa angegeben. Der Wert 0 bedeutet demnach Atmosphärendruck. Die Linie 50 k Pa zeigt die Höhe des Unterdrucks an, der in der Hauptmelkphase sowohl konstant auf den Innenraum des Zitzengummis wie auch maximal in der Saugphase auf den Pulsraum gegeben wird. Betrachtet man einen Zyklus des Pulsunterdrucks in der Stimulationsphase, so steigt etwa von dem Punkt P 1 ausgehend, an dem im Pulsraum Atmosphärendruck herrscht, der Unterdruck kontinuierlich an, bis er im Punkte P 2 einen maximalen Wert von 24 k Pa erreicht. Nach dem Erreichen dieses maximalen Unterdruckes erfolgt sodann wieder ein kontinuierlicher Abbau des Unterdrucks bis im Zeitpunkt P 3 wieder Atmosphärendruck erreicht wird. Wie aus der Kurve deutlich wird, erfolgt der Aufbau des Unterdrucks in der Zeit zwischen P 1 und P 2 sowie der Abbau des Unterdrucks zwischen den Punkten P 2 und P 3 in annähernd ähnlicher Weise. Das heißt, die Steigung des Flankenanstieges 61 der Kurve 60 entspricht etwa der Steigung des Flankenabfalls 62 der Kurve 60. Außerdem ist diese Steigung verhältnismäßig gering. Das bedeutet aber, daß während jedes Zyklus keine abrupte Druckänderung in dem Pulsraum erfolgt, so daß während jedes Zyklus auch kein großer Impuls auf die Zitze einwirkt.

Weiterhin wird aus der Kurve 60 deutlich, daß der maximale Unterdruck in dem Pulsraum nur zu einem ganz kurzen Zeitpunkt, nämlich lediglich während der Zeit im Punkte P 2 erreicht und aufrechterhalten wird. Wie oben ausgeführt wurde, bestimmt die Differenz zwischen dem im Innenraum des Zitzengummis herrschenden Druck und dem maximalen Unterdruck im Pulsraum unter Berücksichtigung des Einfaltdruckes des Zitzengummis die minimale Zuhaltekraft an der Zitzenspitze während jedes Pulszyklus. Je länger die Zeit ist, während der nur eine geringe Zuhaltekraft auf die Zitzenspitze wirkt, um so mehr Milch kann bei dem anliegenden Unterdruck im Innenraum des Zitzengummis abgezogen werden. Dadurch, daß der maximale Unterdruck im Pulsraum immer nur äußerst kurzzeitig erreicht wird, kann die tatsächlich aus der Zitze gezogene Milch sehr genau gesteuert werden und sehr klein gehalten werden. Dadurch kann insgesamt der Euterinnendruck auf dem gewünschten Wert während der Stimulationsphase gehalten werden. Die in Fig. 2 gezeigte Kurve 60 zeigt eine Pulsationskurve mit einer Frequenz von 200 Zyklen pro Minute. Eine solche Pulsationsfrequenz hat sich für die Stimulation als sehr gut erwiesen.

In Fig. 3 ist in ausgezogenen Linien eine ähnliche Pulsationskurve wie in Fig. 2 dargestellt. Bei dieser Stimulation wurde im Innenraum des Zitzengummis ein Unterdruck von 43 k Pa aufrechterhalten. Der Unterdruck im Pulsraum wurde entsprechend der Kurve 70 derart gesteuert, daß er zwischen Atmosphärendruck und einem maximalen Unterdruck von 22,5 k Pa zyklisch schwankte. Auch bei dieser Kurve sind die Anstiegs- und Abfallflanke der Kurve während eines Zyklus etwa gleich steil und verhältnismäßig flach. Der maximale Unterdruck von 22,5 k Pa wird ebenfalls jeweils lediglich während eines äußerst kurzen Zeitpunktes aufrechterhalten. Die Frequenz der Pulsation lag bei 240 Zyklen pro Minute. Die vorgenannten Bedingungen für die Stimulationsphase haben sich als besonders günstig erwiesen. In Fig. 3 ist weiterhin in gestrichelten Linien eine Kurve 80 zum Vergleich dargestellt. Diese Kurve 80 entspricht der üblicherweise angewandten Pulsationskurve während der Hauptmelkphase. Die Besonderheiten dieser Kurve sind, daß der maximale Unterdruck bei 50 k Pa liegt, daß die Pulsation eine Frequenz von 60 Zyklen pro Minute aufweist und daß die Saugphasen im Verhältnis zu den Entlastungsphasen länger sind.

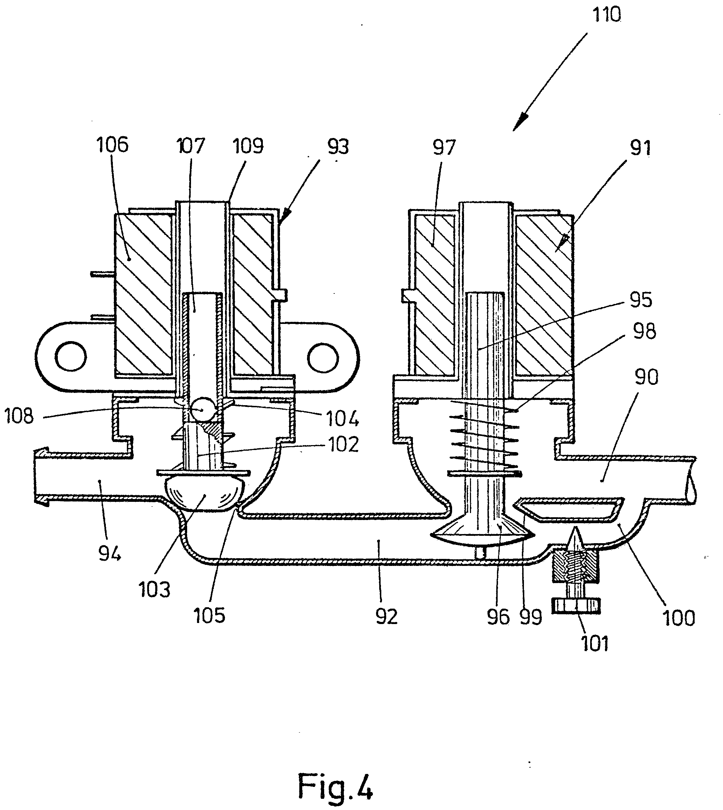

In Fig. 4 ist schematisch eine weitere mögliche Ausführungsform für einen Pulsator dargestellt, mit dem durch elektrische Steuerung die Melkparameter während der Stimulationsphase sowie in der Hauptmelkphase einstellbar sind. In einer Leitung 90, die von der Unterdruckquelle herkommt, liegt ein erstes Magnetventil 91. Die Ausgangsleitung 92 des ersten Magnetventils 91 ist über ein zweites Magnetventil 93 mit der zu den Pulsräumen führenden Leitung 94 verbunden. Das erste Magnetventil 91 weist einen Anker 95 auf, an dessen unterem Ende ein Ventilteller 96 ausgebildet ist. Der Ventilteller 96 wird, wenn sich der Magnet 97 im erregten Zustand befindet, entgegen der Kraft einer Feder 98, die das Magnetventil im unbetätigten Zustand in einer geöffneten Stellung hält, gegen eine Ventilfläche 99 gezogen. Auf diese Weise wird im erregten Zustand des Magneten 97 die Verbindung zwischen der Leitung 90 und der Leitung 92 über das Magnetventil 91 unterbunden.

15

In einer das Magnetventil 91 umgehenden Leitung 100, die eine Verbindung zwischen der Leitung 90 und der Leitung 92 bildet, liegt eine einstellbare Drossel 101.

Die Verbindungsleitung zwischen den Leitungen 92 und 94 ist durch ein zweites Magnetventil 93 verschließbar. Der Anker 102 dieses zweiten Magnetventils, der an seinem unteren Ende ebenfalls einen Ventilteller 103 aufweist, ist durch eine Feder 104 gegen einen Ventilsitz 105 vorgespannt. Sofern die Magnetspule 106 des Magnetventils 93 nicht erregt ist, ist somit die Verbindung zwischen den Leitungen 92 und 94 verschlossen.

Der Anker 102 ist parallel zu seiner Achse mit einer nach oben offenen Blindbohrung 107 versehen. In diese mündet eine Querbohrung 108. Die Öffnung der Querbohrung 108 liegt dann, wenn die Magnetspule 106 nicht erregt ist und das Magnetventil deshalb geschlossen ist, in einer Lage, in der sie mit der Leitung 94 unmittelbar in Verbindung steht.

Dagegen ist die außenliegende Öffnung der Querbohrung 108 dichtend durch eine Rohrhülse 109 verschlossen, wenn die Magnetspule 106 erregt ist und sich der Anker 102 in einer angehobenen Stellung befindet. Bei der Bewegung des Ankers 102 in senkrechter Richtung in Fig. 4 in der Zeichenebene wird dieser durch die Rohrhülse 109 geführt. Im erregten Zustand der Magnetspule 106 gibt somit der Ventilteller 103 den Durchgang zwischen den Leitungen 92 und 94 frei.

Die Funktionsweise des in Fig. 4 gezeigten Pulsators ist wie folgt:

Vor Beginn der Stimulation wird die einstellbare Drossel auf einen vorbestimmten Durchlaß eingestellt. Die Magnetspule 27 wird erregt, so daß das erste Magnetventil 91 geschlossen ist. Sodann wird während der Stimulationsphase das Magnetventil 93 mit der gewünschten Pulsfrequenz gesteuert, so daß dieses Magnetventil sich im Takt der gewünschten Pulsfrequenz öffnet und schließt. Bei jedem Schließen dieses zweiten Magnetventils 93 wird eine Verbindung zwischen der Leitung 94 über die Leitung 92 und die Leitung 100 mit der Leitung 90, die mit der Unterdruckquelle (nicht dargestellt) in Verbindung steht, unterbrochen. In dieser Stellung des zweiten Magnetventils 93 wird jedoch die Öffnung der Querbohrung 108 von der Rohrhülse 109 freigegeben. Auf diese Weise wird eine Verbindung zwischen der Leitung 94 über die Querbohrung 108 und die Blindbohrung 107 mit Atmosphärendruck hergestellt, so daß sich in der Leitung 94 ein Atmosphärendruck aufbauen kann. Wird sodann die Magnetspule 106 erregt, so wird der Anker 102 in den Magneten hineingezogen, wodurch die Öffnung der Querbohrung 108 durch die Rohrhülse 109 verschlossen wird. Gleichzeitig wird der Ventilteller 103 von seinem Ventilsitz 105 abgehoben, so daß nunmehr die Leitung 94 über die Leitung 92 und die Leitung 100 mit der Leitung 90 in Verbindung steht. Aufgrund der Drossel 101 in der Leitung 100 kann sich sodann entsprechend diesem verringerten Durchgang langsam der gewünschte Unterdruck in der Leitung 94 aufbauen. Dadurch kann die Steigung der Anstiegsflanke der Pulskurve vom Atmosphärendruck auf den gewünschten Unterdruck beliebig und genau eingestellt werden. Die Steigung der Abfallflanke von dem maximalen Pulsunterdruck wieder zurück auf Atmosphärendruck könnten in entsprechender Weise dadurch gesteuert werden, daß an dem oberen Ende der Rohrhülse 109 gleichfalls eine einstellbare Drossel vorgesehen wird.

Die Frequenz, mit der das zweite Magnetventil 93 in Vibration gesetzt wird, kann zwischen 90 und 400 Zyklen pro Minute liegen.

Wenn von der Stimulationsphase auf die Hauptmelkphase umgeschaltet wird, wird die Magnetspule 97 entregt, so daß das Magnetventil 91 geöffnet wird. Dadurch wird eine Hauptverbindung zwischen der Leitung 90 und der Leitung 92 hergestellt, so daß nunmehr ein schneller Aufbau eines ausreichenden Unterdrucks in den Pulsräumen stattfinden kann. Gleichzeitig wird die Frequenz des zweiten Magnetventils 93 auf die übliche Frequenz von 60 Zyklen pro Minute für die Hauptmelkphase herabgesetzt.

### Patentansprüche

1. Verfahren zum maschinellen Milchentzug, bei dem zum Entziehen der Milch an dem Innenraum eines an eine Zitze angesetzten Melkbechers ein Unterdruck vorbestimmter Höhe angelegt wird und gegebenenfalls eine Pulsation eines Zitzengummis mit vorbestimmter Frequenz und Stärke durchgeführt wird, und vor der Hauptmelkphase auf die Zitze bei angesetztem Melkbecher während einer vorbestimmten Zeit stimulierend eingewirkt wird, dadurch gekennzeichnet, daß während einer Zeit von 40 bis 90 Sekunden, vorzugsweise während einer Zeit von 40 bis 60 Sekunden, ab Beginn der Stimulationsphase keine Milch entzogen wird, daß erst unmittelbar hieran anschließend mit dem Milchentzug gemäß der Hauptmelkphase begonnen wird, und daß die Pulsatorfrequenz während der Stimulationsphase gegenüber der Hauptmelkphase erhöht wird.

2. Verfahren zum maschinellen Milchentzug, bei dem zum Entziehen der Milch an dem Innenraum eines an eine Zitze angesetzten Melkbechers ein Unterdruck vorbestimmter Höhe angelegt wird und gegebenenfalls eine Pulsation eines Zitzengummis mit vorbestimmter Frequenz und Stärke durchgeführt wird, und vor der Hauptmelkphase auf die Zitze bei angesetztem Melkbecher während einer vorbestimmten Zeit stimulierend eingewirkt wird, dadurch gekennzeichnet, daß während einer Zeit von 40 bis 90 Sekunden, vorzugsweise während einer Zeit von 40−60 Sekunden, ab Beginn der Stimulationsphase keine Milch entzogen wird, daß erst unmittelbar hieran anschließend mit dem Milch-

**0 032 752**

entzug gemäß der Hauptmelkphase begonnen wird, und daß während der Stimulationsphase elektrische Impulse auf die Zitze gegeben werden.

3. Verfahren zum maschinellen Milchentzug, unter Verwendung eines Einraummelkbechers, bei dem zum Entziehen der Milch an dem Innenraum des an die Zitze angesetzten Melkbechers ein Unterdruck vorbestimmter Höhe angelegt wird, und während einer vorbestimmten Zeit vor der Hauptmelkphase auf die Zitze bei angesetztem Melkbecher stimulierend eingewirkt wird, dadurch gekennzeichnet, daß während einer Zeit von 40 bis 90 Sekunden, vorzugsweise von 40 bis 60 Sekunden, ab Beginn der Stimulationsphase keine Milch entzogen und erst unmittelbar hieran anschließend mit dem Milchentzug gemäß der Hauptmelkphase begonnen wird, daß während der Stimulationsphase ein lediglich die Haftung des Melkbechers an der Zitze bewirkender Unterdruck angelegt wird, und daß eine Stimulation durch Anlegen von elektrischen Impulsen von 5 bis 70 Hz an die Zitze erzielt wird.

4. Verfahren nach einem der Ansprüche 1—3, dadurch gekennzeichnet, daß nur während eines Teils der Stimulationsphase stimulierend auf die Zitze eingewirkt wird.

5. Verfahren nach Anspruch 4, dadurch gekennzeichnet, daß etwa 30 Sekunden lang stimulierend auf die Zitze eingewirkt wird, und daß nach einer Unterbrechung von etwa 10 bis 30 Sekunden sodann mit dem Milchentzug begonnen wird.

6. Verfahren nach einem der Ansprüche 1, 2, 4 oder 5, dadurch gekennzeichnet, daß während der Stimulationsphase der Unterdruck der Pulsatorleitung in der sonstigen Saugphase soweit vermindert wird, daß der Zitzengummi auch während der sonstigen Saugphase sich nur mehr soweit öffnen kann, daß keine Milch entzogen wird.

7. Verfahren nach Anspruch 6, dadurch gekennzeichnet, daß die Verminderung des Unterdrucks in der Pulsatorleitung durch Begrenzung des Unterdruckes mittels eines Unterdruckbegrenzungsventils erfolgt.

8. Verfahren nach einem der Ansprüche 1, 2, 4 bis 7, dadurch gekennzeichnet, daß während der Stimulationsphase jeweils in den Entlastungsphasen Druckluft in den Melkbecherzwischenraum eingeleitet wird.

9. Verfahren nach einem der Ansprüche 1, 2, 4 bis 8, dadurch gekennzeichnet, daß während der Stimulationsphase an den Melkbecherzwischenraum ein pulsierender Überdruck angelegt wird und daß an den Zitzengummiinnenraum kein oder nur ein geringer Unterdruck angelegt wird.

10. Verfahren nach Anspruch 9, dadurch gekennzeichnet, daß der Überdruck etwa zwischen 1,2 und $1,7 \cdot 10^5$ Pa pulsiert wird.

11. Verfahren nach einem der Ansprüche 1, 4 bis 10, dadurch gekennzeichnet, daß die Pulsatorfrequenz während der Stimulationsphase auf etwa 100 bis 170 Zyklen pro Minute erhöht wird.

12. Verfahren zum maschinellen Milchentzug, bei dem zum Entziehen der Milch an dem Innenraum eines an eine Zitze angesetztem Melkbechers ein Unterdruck vorbestimmter Höhe angelegt wird und eine Pulsation eines Zitzengummis mit vorbestimmter Frequenz und Stärke durchgeführt wird und bei angesetztem Melkbecher in einer Stimulationsphase während einer vorbestimmten Zeit vor der Hauptmelkphase auf die Zitze stimulierend eingewirkt wird, dadurch gekennzeichnet, daß während der Stimulationsphase die Pulsation des Zitzengummis mit einer um wenigestens 50% gegenüber der Frequenz der Hauptmelkphase erhöhten Frequenz erfolgt und daß während dieses Zeitraumes der maximale Pulsunterdruck im Pulsraum des Melkbechers in Abhängigkeit von dem Unterdruck im Innenraum des Zitzengummis und dem Einfaltdruck des Zitzengummis so gewählt wird, daß er in dem durch die Formel:

$$\text{Pulsunterdruck} = 6 + \frac{\text{Unterdruck im Zitzengummiinnenraum}}{3} + \frac{\text{Einfaltdruck des Zitzengummis}}{4} \pm 5 \, \text{k Pa}$$
(Stimulationsphase)

angegebenen Bereich liegt, und daß erst nach einer Zeit von 40 bis 90 Sekunden, vorzugsweise nach einer Zeit von 40 bis 60 Sekunden, ab Beginn der Stimulationsphase mit dem Milchentzug entsprechend der Hauptmelkphase begonnen wird.

13. Verfahren zum maschinellen Milchentzug, bei dem zum Entziehen der Milch an dem Innenraum eines an eine Zitze angesetzten Einraummelkbechers ein Unterdruck vorbestimmter Höhe angelegt wird und bei angesetztem Melkbecher in einer Stimulationsphase während einer vorbestimmten Zeit vor der Hauptmelkphase auf die Zitze stimulierend eingewirkt wird, dadurch gekennzeichnet, daß während der Stimulationsphase ein Pulsvolumen am oberen Rand des Einraumbechers mit einer um wenigestens 50% gegenüber der Hauptmelkphase erhöhten Frequenz pulsiert wird und daß während dieses Zeitraumes der Unterdruck im Innenraum des Zitzengummis auf 18 bis 25 k Pa begrenzt wird, und daß erst nach einer Zeit von 40 bis 90 Sekunden, vorzugsweise nach einer Zeit von 40 bis 60 Sekunden, ab Beginn der Stimulationsphase mit dem Milchentzug entsprechend der Hauptmelkphase begonnen wird.

14. Verfahren nach einem der Ansprüche 12 oder 13, dadurch gekennzeichnet, daß die Pulsation in der Stimulationsphase mit einer Frequenz von 140 bis 280 und vorzugsweise von 160 bis 220 Zyklen pro

17

**0 032 752**

Minute erfolgt.

15. Verfahren nach einem der Ansprüche 12 bis 14, dadurch gekennzeichnet, daß nur während eines Teils der vorbestimmten Zeit der Stimulationsphase stimulierend auf die Zitze eingewirkt wird.

16. Verfahren nach einem der Ansprüche 12 bis 15, dadurch gekennzeichnet, daß der Anstieg und der Abfall des Unterdrucks im Pulsraum bzw. Pulsvolumen des Melkbechers so gesteuert wird, daß sich jeweils ein weitgehend konstanter Anstieg wie auch Abfall des Unterdrucks während der Stimulationsphase ergibt.

17. Verfahren nach Anspruch 16, dadurch gekennzeichnet, daß der Anstieg und der Abfall des Unterdrucks praktisch den gleichen zeitlichen Verlauf haben.

18. Verfahren nach einem der Ansprüche 12 bis 17, dadurch gekennzeichnet, daß bei Erreichen des vorbestimmten Unterdrucks im Pulsraum des Melkbechers unmittelbar eine Umsteuerung von Anstieg auf Abfall des Unterdrucks erfolgt.

19. Verfahren nach einem der Ansprüche 12 oder 14 bis 18, dadurch gekennzeichnet, daß die Einstellung des maximalen Unterdrucks in dem Pulsraum während der Stimulationsphase mittels eines mit der Pulsatorleitung in Verbindung stehenden Unterdruckbegrenzungsventils erfolgt.

20. Verfahren nach einem der Ansprüche 12 bis 19, dadurch gekennzeichnet, daß während der Stimulationsphase an den Pulsraum ein Druck angelegt wird, der zwischen dem aus der Formel in Anspruch 12 errechenbaren Pulsunterdruck und einem im Bereich von 0 bis 15 k Pa liegenden Überdruck pulsiert.

21. Vorrichtung zur Durchführung des Verfahrens nach einem der Ansprüche 12 bis 20, mit einem mit einer Unterdruckquelle einerseits und zu den Pulsräumen der Melkbecher führenden Pulsatorleitungen (3, 4) andererseits verbundenen Pulsator (1) mit zwei durch ein Verbindungsgestänge (12) miteinander verbundenen Membranen (8, 9), die jeweils eine Druckdose (6, 7) in zwei getrennte Räume unterteilen, von denen zwei Räume (10, 13) über eine ggf. einstellbare Drossel (26) miteinander in Verbindung stehen, während die beiden anderen Räume (11, 12) wechselweise über ein Steuerwerk (23) mit der Unterdruckquelle verbindbar sind, und mit einer mit dem Verbindungsgestänge verbundenen Umsteuervorrichtung (15—19) zum wechselweisen Verbinden einer oder zwei Gruppe(n) von Pulsatorleitungen (3, 4) mit der Unterdruckquelle und mit atmosphärischer Zuluft, dadurch gekennzeichnet, daß in der zu der Unterdruckquelle führenden Hauptleitung (2) eine eine erste steuerbare Durchlaßöffnung (33) aufweisende Shuntleitung vorgesehen ist, daß eine die einstellbare Drossel (26) umgehende Bypassleitung (50) vorgesehen ist, daß in der Bypassleitung eine zweite einstellbare Drossel (71) vorgesehen ist, und daß in der Hauptleitung (2) eine durch die die Durchlaßöffnung (33) enthaltende Shuntleitung umgangene und während der Stimulationsphase verschließbare erste Absperrvorrichtung (31, 32) und in der Bypassleitung (50) eine während der Hauptmelkphase verschließbare zweite Absperrvorrichtung (44) vorgesehen sind.

22. Vorrichtung nach Anspruch 21, dadurch gekennzeichnet, daß das Steuerwerk (23) unmittelbar mit der zu der Unterdruckquelle führenden Hauptleitung (2) verbunden ist.

23. Vorrichtung nach Anspruch 21 und 22, dadurch gekennzeichnet, daß in der Leitung für atmosphärische Zuluft zu der Umsteuervorrichtung (15, 16, 17, 18, 19) des Pulsators (1) eine dritte, in der Stimulationsphase verschließbare Absperrvorrichtung vorgesehen ist, und daß eine die dritte Absperrvorrichtung umgehende zweite Shuntleitung mit einer zweiten steuerbaren Durchlaßöffnung vorgesehen ist.

24. Vorrichtung nach einem der Ansprüche 21 bis 23, dadurch gekennzeichnet, daß die erste Absperrvorrichtung in der Hauptleitung (2) durch ein Membranventil (30) gebildet wird, dessen Steuerseite (36) sowohl mit einer Leitung (5) für atmosphärische Zuluft wie über eine Drossel (54) mit der Unterdruckquelle verbunden ist.

25. Vorrichtung nach einem der Ansprüche 21 bis 24, dadurch gekennzeichnet, daß die zweite Absperrvorrichtung eine pneumatisch steuerbare Membran (46) umfaßt, deren Steuerseite sowohl mit einer Leitung (5) für atmosphärische Zuluft wie über eine Drossel (54) mit der Unterdruckquelle verbunden ist.

26. Vorrichtung nach Anspruch 24 und/oder 25, dadurch gekennzeichnet, daß in der Leitung (5) für die atmosphärische Zuluft eine vierte, in Abhängigkeit von einer Vorwahlzeitsteuerung (52) schließbare Absperrvorrichtung (37, 38, 39) vorgesehen ist.

27. Vorrichtung zur Durchführung des Verfahrens nach einem der Ansprüche 12 bis 20, mit einem mit einer Unterdruckquelle einerseits und zu den Pulsräumen der Melkbecher führenden Pulsatorleitungen (3, 4) andererseits verbundenen elektromagnetisch steuerbaren Pulsator (1), dadurch gekennzeichnet, daß in der von der Unterdruckquelle zu den Pulsatorleitungen (94) führenden Leitung (90) ein erstes und zweites elektromagnetisches Ventil (91, 93) angeordnet sind, daß eine das erste elektromagnetische Ventil (91) umgehende Bypassleitung (100) mit einer einstellbaren Drossel (101) vorgesehen ist, und daß das zweite elektromagnetische Ventil (93) in einer ersten Stellung die Verbindung zwischen der Unterdruckquelle und den Pulsatorleitungen (94) verschließt und die Pulsatorleitungen mit der Atmosphäre verbindet und in einer zweiten Stellung die Pulsatorleitung (94) mit der Unterdruckquelle verbindet und die Verbindung der Pulsatorleitungen mit der Atmosphäre unterbricht.

28. Vorrichtung nach Anspruch 27, dadurch gekennzeichnet, daß das zweite elektromagnetische Ventil (93) mit einer Frequenz bis zu 400 Zyklen/min zwischen seiner ersten und zweiten Stellung

18

umsteuerbar ist.

29. Vorrichtung nach einem der Ansprüche 27 oder 28, dadurch gekennzeichnet, daß eine Zeitsteuervorrichtung vorgesehen ist, durch die das erste elektromagnetische Ventil (91) während der Stimulationsphase in seiner geschlossenen und während der Hauptmelkphase in der geöffneten Stellung haltbar ist.


**Claims**

1. Method of mechanical milking, in which, for the extraction of the milk, a reduced pressure of predetermined level is applied inside a milk beaker disposed on a teat and, if required, a pulsation of a teat rubber with predetermined frequency and intensity is performed, and, before the main milking phase, a stimulating action is exerted during a predetermined time on the teat with the milking beaker in position, characterized in that, for a period of 40 to 90 seconds, preferably for a period of 40 to 60 seconds, from the beginning of the stimulation phase no milk is drawn, in that immediately after this a start is made with the extraction of milk according to the main milking phase, and in that the pulsator frequency is increased during the stimulation phase as compared with the main milking phase.

2. Method of mechanical milking, in which, for the extraction of the milk, a reduced pressure of predetermined level is applied inside a milking beaker disposed on a teat and, if required, a pulsation of a teat rubber with predetermined frequency and intensity is performed, and, before the main milking phase, a stimulating action is exerted during a predetermined time on the teat with the milking beaker in position, characterized in that, for a period of 40 to 90 seconds, preferably for a period of 40 to 60 seconds, from the beginning of the stimulation phase no milk is drawn, in that immediately after this a start is made with the extraction of milk according to the main milking phase, and in that during the stimulation phase electric pulses are applied to the teat.

3. Method of mechanical milking, using a single cavity milking beaker, in which method, for the extraction of the milk, a reduced pressure of predetermined level is applied inside the milking beaker disposed on the teat, and a stimulating action is exerted during a predetermined time before the main milking phase on the teat with the milking beaker in position, characterized in that, for a period of 40 to 90 seconds, preferably for a period of 40 to 60 seconds, from the beginning of the stimulation phase no milk is drawn, in that immediately after this a start is made with the extraction of milk according to the main milking phase, in that during the stimulation phase a reduced pressure is applied which effects only the holding of the milking beaker onto the teat, and in that a stimulation is achieved through the application of electric pulses from 5 to 70 Hz on the teat.

4. Method according to one of claims 1—3 characterized in that a stimulating action is effected on the teat only during part of the stimulation phase.

5. Method according to claim 4, characterized in that a stimulating action is performed on the teat for some 30 seconds, and in that, after an interruption of some 10 to 30 seconds, milk extraction is begun.

6. Method according to one of claims 1, 2, 4 or 5, characterized in that during the stimulation phase the reduced pressure of the pulsator line in the remaining suction phase is reduced to such an extent that the teat rubber, also during the remaining suction phase, can only open to such an extent that no milk is drawn.

7. Method according to claim 6, characterized in that the lowering of the reduced pressure in the pulsator line is effected by limitation of the reduced pressure by means of a reduced pressure limitation valve.

8. Method according to one of claims 1, 2, 4 to 7, characterized in that during the stimulation phase compressed air is introduced into the milking beaker intermediate space in each instance in the discharge phases.

9. Method according to one of claims 1, 2, 4 to 8, characterized in that during the stimulation phase a pulsating excess pressure is applied to the milking beaker intermediate space, and in that no reduced pressure or only a small one is applied to the teat rubber internal space.

10. Method according to claim 9, characterized in that the excess pressure is pulsated substantially between 1.2 and 1.7 · $10^5$ Pa.

11. Method according to one of claims 1, 4 to 10, characterized in that the pulsator frequency during the stimulation phase is raised to approximately 100 to 170 cycles per minute.

12. Method of mechanical milking, in which, for the extraction of the milk, a reduced pressure of predetermined level is applied inside a milking beaker disposed on a teat and a pulsation of a teat rubber with predetermined frequency and intensity is performed and, with the milking beaker in position, in a stimulation phase, a stimulating action is exerted during a predetermined period before the main milking phase on the teat, characterized in that during the stimulation phase the pulsation of the teat rubber is effected at a frequency at least 50% above the frequency of the main milking phase, and in that during said period the maximum pulse reduced pressure in the pulsation space of the milking beaker is selected depending upon the reduced pressure inside the teat rubber and the simple

0 032 752

pressure of the teat rubber in such a manner that it lies within the range shown by the formula:

$$\text{Pulse reduced pressure} = 6 + \frac{\text{Reduced Pressure inside the Teat Rubber}}{3} + \frac{\text{Simple Pressure of the Teat Rubber}}{4} \pm 5 \, \text{kPa}$$
(Stimulation phase)

and in that only after a period of 40 to 90 seconds, preferably after a period of 40 to 60 seconds from the start of the stimulation phase a start is made with the extraction of milk correspondingly to the main milking phase.

13. Method of mechanical milking, in which, for the extraction of the milk, a reduced pressure of predetermined level is applied inside a one-cavity milking beaker disposed on a teat and, with the milking beaker in position, in a stimulation phase during a predetermined period before the main milking phase a stimulating action is performed on the teat, characterized in that during the stimulation phase a pulsation volume is pulsated at the upper edge of the single-cavity beaker with a frequency of at least 50% more than that of the main milking phase, and in that during this period the reduced pressure inside the teat rubber is limited to 18 to 25 k pa, and in that only after a period of 40 to 90 seconds, preferably after a period of 40 to 60 seconds from the beginning of the stimulation phase a start is made with milk extraction according to the main milking phase.

14. Method according to one of claims 12 or 13, characterized in that the pulsation in the stimulation phase is effected at a frequency of 140 to 280 and preferably of 160 to 220 cyclis per minute.

15. Method according to one of claims 12 to 14, characterized in that a stimulation action is performed on the teat only during part of the predetermined time of the stimulation phase.

16. Method according to one of claims 12 to 15, characterized in that the rise and fall of the underpressure in the pulsation space or pulse volume of the milking beaker is controlled in such a manner that in each case a substantially constant rise or drop of the reduced pressure is achieved during the stimulation phase.

17. Method according to claim 16, characterized in that the rise and the drop of the reduced pressure extend practically over the same period.

18. Method according to one of claims 12 to 17, characterized in that on reaching the predetermined reduced pressure in the pulsating space of the milk beaker a redirection from rise to fall of the reduced pressure is immediately effected.

19. Method according to one of claims 12 or 14 to 18, characterized in that the adjustment of the maximum reduced pressure in the pulsation space during the stimulation phase is effected by means of a reduced pressure limitation valve connected with the pulsator line.

20. Method according to one of claims 12 to 19, characterized in that during the stimulation phase the application is effected to the pulsation space of a pressure pulsating between the pulsation reduced pressure calculable from the formula in claim 12 and an excess pressure within the range of 0 to 15 k pa.

21. Apparatus for carrying out the method according to one of claims 12 to 20 with a pulsator (1) connected on the one hand with a source of reduced pressure and on the other hand with the pulsation lines (3, 4) leading to the pulsation chambers of the milking beakers, said pulsator having two membranes (8, 9) connected together by means of a connection linkage (12) which membranes in each case subdivide a pressure box (6, 7) into two separate chambers of which chambers two chambers (10, 13) are joined together by means of a throttle valve (26) which may be adjusted if desired, while the other two chambers (11, 12) are alternately connectable with the source of reduced pressure via a control system (23), and with a switching-over device connected with the connection linkage (15—19) for the alternative connection of one or two group(s) of pulsator lines (3, 4) with the source of reduced pressure and with the air coming from the atmosphere, characterized in that in the main line (2) leading to the source of reduced pressure provision is made for a shunt line possessing a first controllable outlet opening (33), in that a by-pass line (50) surrounding the adjustable throttle (26) is provided, in that a second adjustable throttle (71) is provided in the by-pass line, and in that provision is made in the main line (2) for a first shut-off device (31, 32) which is surrounded by the shunt line containing the outlet opening (33) and closable during the stimulation phase, and in the by-pass line (50) for a second shut-off device (44) closable during the main milking phase.

22. Apparatus according to claim 21, characterized in that the control system (23) is connected directly with the main line (2) leading to the source of reduced pressure.

23. Apparatus according to claims 21 and 22, characterized in that the line for admitted atmospheric air to the switch-over device (15, 16, 17, 18, 19) of the pulsator (1) has inside it a third shut-off device closable in the stimulation phase, and in that a second shunt line surrounding the third shut-off device is provided with a second controllable outlet opening.

24. Apparatus according to one of claims 21 to 23, characterized in that the first shut-off device in the main line (2) is constituted by a membrane valve (30) the control side (36) of which is connected both with a line (5) for admitted atmospheric air and, via a throttle (54), with the source of reduced pressure.

25. Apparatus according to one of claims 21 to 24, characterized in that the second shut-off device

20

comprises a pneumatically controllable membrane (46) the control side of which is connected both with a line (5) for admitted atmospheric air and, via a throttle (54), with the source of reduced pressure.

26. Apparatus according to claim 24 and/or 25, characterized in that in the line (5) for admitted atmospheric air a fourth shut-off device (37, 38, 39) closable depending upon a pre-selection time control (52) is provided.

27. Apparatus for carrying out the method according to one of claims 12 to 20 with an electro-magnetically controllable pulsator (1) connected on the one hand with a source of reduced pressure and with the pulsation lines (3, 4) leading to the pulsation chambers of the milking beakers, on the other hand, characterized in that a first and a second electro-magnetic valves (91, 93) are disposed in the line (90) leading from the source of reduced pressure to the pulsator lines (94), in that a by-pass line (100) surrounding the first electro-magnetic valve (91) is provided with an adjustable throttle (101), and in that the second electro-magnetic valve (93) in a first position closes the connection between the source of reduced pressure and the pulsator line (94) and connects the pulsator lines with the atmosphere and, in a second position, connects the pulsator line (94) with the source of reduced pressure and interrupts the connection of the pulsator lines with the atmosphere.

28. Apparatus according to claim 27, characterized in that the second electro-magnetic valve (93) is controllable with a frequency of up to 400 cycles per minute between its first and second position.

29. Apparatus according to one of claims 27 or 28 characterized in that a second time control device is provided by means of which the first electro-magnetic valve (91) can be held during the stimulation phase in its closed position, and during the main milking phase in the open position.


## Revendications

1. Procédé d'extraction mécanique du lait, dans lequel , en vue de l'extraction du lait, une dépression de grandeur déterminée est appliquée à l'intérieur d'un gobelet trayeur placé sur un trayon, et un manchon trayeur est pulsé le cas échéant avec une fréquence et une intensité déterminées, et une action de stimulation est exercée sur le trayon, le gobelet trayeur étant en place, pendant une durée déterminée préalablement à la phase de traite principale, caractérisé en ce que, pendant une durée de 40 à 90 secondes, et de préférence de 40 à 60 secondes, à partir du début de la phase de stimulation, aucune extraction de lait n'est effectuée, en ce que l'extraction du lait au titre de la phase de traite principale est commencée immédiatement après, et en ce que la fréquence de pulsation pendant la phase de stimulation est augmentée par rapport à la phase de traite principale.

2. Procédé d'extraction mécanique du lait, dans lequel, en vue de l'extraction du lait, une dépression de grandeur déterminée est appliquée à l'intérieur d'un gobelet trayeur placé sur un trayon et un manchon trayeur est pulsé le cas échéant avec une fréquence et une intensité déterminées, et une action de stimulation est exercée sur le trayon, le gobelet trayeur étant en place, pendant une durée déterminée préalablement à la phase de la traite principale, caractérisé en ce que, pendant une durée de 40 à 90 secondes, et de préférence de 40 à 60 secondes, à partir du début de la phase de stimulation, aucune extraction de lait n'est effectuée, en ce que l'extraction du lait au titre de la phase de traite principale est commencée immédiatement après, et en ce que des impulsions électriques sont appliquées au trayon pendant la phase de stimulation.

3. Procédé d'extraction mécanique du lait, utilisant un gobelet trayeur à un seul compartiment, dans lequel, en vue de l'extraction du lait, une dépression de grandeur déterminée est appliquée à l'intérieur du gobelet trayeur placé sur le trayon, et une action de stimulation est exercée sur le trayon, le gobelet trayeur étant en place, pendant une durée déterminée préalablement à la phase de traite principale, caractérisé en ce que, pendant une durée de 40 à 90 secondes, et de préférence de 40 à 60 secondes, à partir du début de la phase de stimulation, aucune extraction de lait n'est effectuée, l'extraction du lait au titre de la phase de traite principale étant commencée immédiatement après, en ce que pendant la phase de stimulation est appliquée une dépression assurant simplement l'adhérence du gobelet trayeur au trayon, et en ce qu'une stimulation est obtenue en appliquant au trayon des impulsions électriques de 5 à 70 Hz.

4. Procédé selon l'une des revendications 1 à 3, caractérisé en ce qu'une action de stimulation n'est exercée sur le trayon que pendant une partie de la phase de stimulation.

5. Procédé selon la revendication 4, caractérisé en ce qu'une action de stimulation est exercée sur le trayon pendant 30 secondes environ, et en ce qu'après une interruption de 10 à 30 secondes environ l'extraction de lait est ensuite commencée.

6. Procédé selon l'une des revendications 1, 2, 4 ou 5, caractérisé en ce que pendant la phase de stimulation, la dépression de la conduite du pulsateur est diminuée dans la phase d'aspiration de telle sorte que l'ouverture du manchon trayeur ne puisse se produire que dans une limite telle que l'extraction de lait est nulle.

7. Procédé selon la revendication 6, caractérisé en ce que la diminution de la dépression dans la conduite de pulsation est obtenue par limitation de la dépression au moyen d'une vanne limiteuse de dépression.

8. Procédé selon l'une des revendications 1, 2 et 4 à 7, caractérisé en ce que pendant la phase de stimulation, de l'air comprimé est introduit dans le compartiment intermédiaire du gobelet trayeur dans les phases de décharge.

9. Procédé selon l'une des revendications 1, 2 et 4 à 8, caractérisé en ce que pendant la phase de stimulation, une surpression pulsée est appliquée au compartiment intermédiaire du gobelet trayeur, et en ce qu'une dépression très faible ou nulle est appliquée à l'intérieur du manchon trayeur.

10. Procédé selon la revendication 9, caractérisé en ce que la surpression pulsée est comprise entre 1,2 et 1,7 · 10⁵ Pa.

11. Procédé selon l'une des revendications 1 et 4 à 10, caractérisé en ce que la fréquence du pulsateur pendant la phase de stimulation est augmentée jusqu'à 100 à 170 cycles/min.

12. Procédé d'extraction mécanique du lait, caractérisé en ce que, en vue de l'extraction du lait, une dépression de grandeur déterminée est appliquée à l'intérieur d'un gobelet trayeur placé sur un trayon, et un manchon trayeur est pulsé avec une fréquence et une intensité déterminées, et une action de stimulation est exercée sur le trayon, le gobelet trayeur étant en place, pendant une durée déterminée préalablement à la phase de traite principale, caractérisé en ce que pendant la phase de stimulation le manchon trayeur est pulsé avec une fréquence augmentée d'au moins 50% par rapport à la fréquence de la phase de traite principale, et en ce que pendant ce même temps la dépression pulsée maximum dans la chambre de pulsation du gobelet trayeur est choisie en fonction de la dépression à l'intérieur du manchon trayeur et de la pression de plissement du manchon trayeur, de telle sorte qu'elle se situe dans la plage indiquée par la formule:

$$\text{Dépression pulsée} = 6 + \frac{\text{dépression à l'intérieur du manchon trayeur}}{3} + \frac{\text{pression de plissement du manchon trayeur}}{4} \pm 5\,\text{kPa}$$
(phase de stimulation)

et en ce que l'extraction du lait au titre de la phase de traite principale ne commence qu'au bout d'une durée de 40 à 90 secondes, et de préférence de 40 à 60 secondes, à partir du début de la phase de stimulation.

13. Procédé d'extraction mécanique du lait, dans lequel, en vue de l'extraction du lait, une dépression de grandeur déterminée est appliquée à l'intérieur d'un gobelet trayeur à un seul compartiment placé sur un trayon, et une action de stimulation est exercée sur le trayon, le gobelet trayeur étant en place, pendant une durée déterminée préalablement à la phase de traite principale, caractérisé en ce que pendant la phase de stimulation, un volume situé sur le bord supérieur du gobelet trayeur à un compartiment est pulsé avec une fréquence augmentée d'au moins 50% par rapport à la fréquence de la phase de traite principale, et en ce que pendant ce même temps la dépression à l'intérieur du manchon trayeur est limitée à une valeur de 18 à 25 kPa, et en ce que l'extraction de lait au titre de la phase de traite principale ne commence qu'au bout d'une durée de 40 à 90 secondes, et de préférence de 40 à 60 secondes, à partir du début de la phase de stimulation.

14. Procédé selon l'une des revendications 12 ou 13, caractérisé en ce que dans la phase de stimulation la pulsation est produite avec une fréquence de 140 à 280, et de préférence de 160 à 220 cycles/min.

15. Procédé selon l'une des revendications 12 à 14, caractérisé en ce qu'une action de stimulation n'est exercée sur le trayon que pendant une fraction de la durée prédéterminée de la phase de stimulation.

16. Procédé selon l'une des revendications 12 à 15, caractérisé en ce que la croissance et la décroissance de la dépression dans la chambre de pulsation sont réglées de telle façon qu'on constate une croissance et une décroissance sensiblement constantes de la dépression pendant la phase de stimulation.

17. Procédé selon la revendication 16, caractérisé en ce que la croissance et la décroissance de la dépression présentent pratiquement le même profil dans le temps.

18. Procédé selon l'une des revendications 12 à 17, caractérisé en ce que dès qu'est atteinte la valeur prédéterminée de la dépression dans la chambre de pulsation du gobelet trayeur, il se produit immédiatement une commutation de la croissance vers la décroissance de la dépression.

19. Procédé selon l'une des revendications 12 ou 14 à 18, caractérisé en ce que le réglage de la dépression maximum dans la chambre de pulsation pendant la phase de stimulation s'effectue au moyen d'une vanne limiteuse de dépression reliée à la conduite du pulsateur.

20. Procédé selon l'une des revendications 12 à 19, caractérisé en ce que pendant la phase de stimulation est appliquée à la chambre de pulsation une pression pulsée, comprise entre la dépression pulsée résultant de la formule selon la revendication 12 et une surpression se situant dans la plage de 0 à 15 kPa.

21. Dispositif pour la mise en oeuvre du procédé selon l'une des revendications 12 à 20, comportant un pulsateur (1), relié d'une part à une source de dépression et d'autre part aux conduites du pulsateur (3, 4) menant aux chambres de pulsation des gobelets trayeurs, muni de deux membranes (8, 9) reliées entre elles par une tige de liaison (12), lesquelles divisent chacune une capsule (6, 7) en deux compartiments séparés, parmi lesquels deux compartiments (10, 13) communiquent entre eux par l'intermédiaire d'un étrangleur (26) pouvant être réglable, tandis que les deux autres compartiments (11, 12) peuvent être alternativement reliés, par l'intermédiaire d'un organe de commande (23), à la source de dépression, et un dispositif in verseur (15 à 19) solidaire de la tige de liaison, destiné à mettre un ou deux groupe(s) de conduites du pulsateur (3, 4) en liaison alternativement avec la source de dépression et avec l'air atmosphérique, caractérisé en ce que dans la conduite principale (2) menant à la source de dépression est prévue une conduite de shunt comportant un premier orifice de passage (33), en ce qu'il est prévu une conduite de dérivation (50) contournant l'étrangleur réglable (26), en ce qu'il est prévu dans la conduite de dérivation un second étrangleur réglable (71), et en ce qu'il est prévu dans la conduite principale (2) un premier dispositif d'arrêt (31, 32) contourné par la conduite de shunt comportant l'orifice de passage (33) et pouvant être fermé pendant la phase de stimulation, et dans la conduite de dérivation (50) un second dispositif d'arrêt (44) pouvant être fermé pendant la phase de traite principale.

22. Dispositif selon la revendication 21, caractérisé en ce que l'organe de commande (23) est relié directement à la conduite principale (2) menant à la source de dépression.

23. Dispositif selon la revendication 21 ou 22, caractérisé en ce qu'il est prévu dans la conduite d'amenée d'air atmosphérique au dispositif inverseur (15, 16, 17, 18, 19) du pulsateur (1) un troisième dispositif d'arrêt pouvant être fermé pendant la phase de stimulation, et en ce qu'il est prévu une seconde conduite de shunt comportant un second orifice de passage réglable et contournant le troisième dispositif d'arrêt.

24. Dispositif selon l'une des revendications 21 à 23, caractérisé en ce que le premier dispositif d'arrêt placé sur la conduite principale (2) est constitué par une vanne à diaphragme (30), dont le côté de commande (36) est relié à la fois à une conduite (5) dàmenée d'air atmosphérique et, par l'intermédiaire d'un étranglement (54), à la source de dépression.

25. Dispositif selon l'une des revendications 21 à 24, caractérisé en ce que le second dispositif d'arrêt comporte une membrane (46) à commande pneumatique, dont le côté de commande est relié à la fois à une conduite (5) d'amenée d'air atmosphérique et, par l'intermédiaire d'un étranglement (54), à la source de dépression.

26. Dispositif selon la revendication 24 et/ou 25, caractérisé en ce qu'il est prévu dans la conduite (5) d'amenée d'air atmosphérique un quatrième dispositif d'arrêt (37, 38, 39) pouvant être fermé sous l'action d'une commande temporisée à pré-sélection (52).

27. Dispositif pour la mise en oeuvre du procédé selon l'une des revendications 12 à 20, comportant un pulsateur (1) à commande pneumatique, relié d'une part à une source de dépression et d'autre part aux conduites du pulsateur (3, 4) menant aux chambres de pulsation des gobelets trayeurs, caractérisé en ce que dans la conduite (90) menant de la source de dépression aux conduites du pulsateur (94) sont disposées une première et une seconde vannes électromagnétiques (91, 93), en ce qu'il est prévu une conduite de dérivation (100) avec, étrangleur réglable (101) contournant la première vanne électromagnétique (91), et en ce que la seconde vanne électromagnétique (93), dans une première position ferme la liaison entre la source de dépression et les conduites du pulsateur (94) et relie les conduites du pulsateur (94) à l'atmosphère, et dans une seconde position relie les conduites du pulsateur (94) à la source de dépression et interrompt la liaison entre les conduites du pulsateur (94) et l'atmosphère.

28. Dispositif selon la revendication 27, caractérisé en ce qu'une commutation peut être effectuée entre la première et la seconde positions de la seconde vanne électromagnétique (93) à une fréquence de 400 cycles/min.

29. Dispositif selon l'une des revendications 27 ou 28, caractérisé en ce qu'il est prévu un dispositif temporisé, à l'aide duquel la première vanne électromagnétique (91) peut être maintenue en position fermée pendant la phase de stimulation et en position ouverte pendant la phase de traite principale.

Fig.1

Fig. 2

Fig. 3

0 032 752

Fig.4